# EUROPEAN PATENT SPECIFICATION

(11) **EP 3 971 439 B1**
(45) Date of publication and mention of the grant of the patent: **13.12.2023**
(21) Application number: 20000336.6
(22) Date of filing: 22.09.2020
(51) Int. Cl.: F16D 65/12, B60T 13/74

(54) **HYBRID PERMANENT MAGNET-ELECTROMAGNETIC EDDY CURRENT BRAKE WITH INTEGRATED FRICTION BRAKE**
HYBRIDE DAUERMAGNETISCHE ELEKTROMAGNETISCHE WIRBELSTROMBREMSE MIT INTEGRIERTER REIBUNGSBREMSE
FREIN HYBRIDE À AIMANT PERMANENT ET À COURANT DE FOUCAULT ÉLECTROMAGNÉTIQUE AVEC FREIN À FRICTION INTÉGRÉ

(43) Date of publication of application: 23.03.2022
(73) Proprietor: Aeroflux Braking Systems Inc., Toronto, ON M6S 4Y9 (CA)
(72) Inventor: KOSTIC, Nikola, Toronto, ON M6S 4Y9 (CA)
(74) Representative: Batakliev, Dimitar

(56) References cited:
- CN-A- 110 707 900
- JP-A- 2016 171 727
- US-B1- 10 454 341

## Description

### FIELD OF THE INVENTION

The present invention relates generally to braking systems, and more specifically to an axially or radially actuated hybrid permanent magnet - electromagnetic eddy current brake.

### BACKGROUND

Brakes have two primary functions: 1) to decelerate a rotating or sliding member and 2) to keep the member stationary when not in motion. In some cases, the brakes may also be used to steer a vehicle on the ground by applying differential braking. Conventional brakes work by converting kinetic energy into heat energy through friction generated between brake pads. Subsequently, the brake pads wear over time and require maintenance or replacement.

Carbon disc brakes are a subset of conventional friction brakes that decelerate a vehicle through high-force contact between several carbon discs. As a result of the high-force contact, carbon disc brakes often wear quickly, require regular maintenance, and have limited safe service lives. The elimination of carbon disc brakes could improve brake life and decrease material consumption, lower brake maintenance costs, and possibly eliminate the emission of carbon dust from brakes. Carbon dust is detrimental to the health of people, especially personnel working near or maintaining such brakes, if/when inhaled.

Most aircraft have carbon disc brakes on each of the main landing gear wheels. Light aircraft brakes typically comprise a single disc attached to each wheel. Brakes on large aircraft may comprise multiple discs attached to each wheel. The disc can be keyed or bolted to the wheel assembly, or can be produced as an integral part of the wheel. The disc rotates with the wheel while brake pads are squeezed against one or both sides of the disc. The braking torque is resisted by a non-rotating caliper or torque tube fixed to the landing gear structure.

Aerospace manufacturers worldwide have committed to reducing aviation CO₂ emissions by 50% from 2005 levels by 2050. One of the most wasteful systems on a modern aircraft is the brake. Conventional aircraft brakes rely on friction between one or more brake pads and a corresponding rotor to slop the wheels from turning. However, friction also results in wear and degradation of the brakes over time. Their high wear rate means that an aircraft's brakes must be replaced relatively frequently. The production of replacement brake pads results in additional CO₂ emissions and the subsequent maintenance procedure to replace the brakes is time consuming, labor intensive, and requires the aircraft to be grounded.

As per federal aviation regulations, brake system maintenance on certified light aircraft is not a legal owner maintenance task as it is not considered a preventive maintenance item. Work on the brake system must therefore be completed under the supervision of an authorized airframe and powerplant (A&P) mechanic. This further complicates the brake maintenance procedure and results in additional logistical and scheduling delays. Private owners of light aircraft often prefer to perform preventive maintenance on their own aircraft. This requirement therefore represents a significant obstacle to having their aircraft in a ready-to-fly state at all times.

In commercial aircraft, brake system maintenance is one of the only on-condition maintenance tasks. This means that there is no set schedule to when brakes need to be replaced. Instead, it depends on the degree of use, predominant weather conditions during use, and even how hard the pilots apply the brakes during each landing. This makes it difficult to predict and therefore very difficult to bundle with other regular maintenance tasks as a means of lowering maintenance costs and preventing schedule disruption. Furthermore, aircraft brake maintenance occurs much more frequently and unpredictably than other major aircraft subsystems. The high frequency and relative unpredictability of brake replacement in commercial aircraft imposes a significant financial, logistical, and safety burden on aircraft operators and airlines. U.S. Patent No. 10,454,341 shows a braking system wherein electro-permanent magnets mounted to a first disc can be activated to apply a braking force on a second disc that is disposed adjacent the first disc. JP Patent Publication No. 2016171727 discloses an eddy current brake in which an array of alternating north-south oriented magnets on a first body are arranged relative to a second body to induce a braking force there between.

Therefore a need exists for a low wear rate brake capable of replacing conventional friction brakes.

### SUMMARY

According to a first aspect of the present invention, a magnetic brake assembly for use with a wheel rim is described. The magnetic brake assembly includes a rotor secured to rotate with the wheel rim and a stator secured to be rotationally stationary relative to the rotor. One of the rotor and stator comprises an electrically conductive body and the other of the rotor and stator comprises a magnetic array including a plurality of magnets configured to generate a magnetic flux. An actuator is operably connected to at least one of the electrically conductive body and the magnetic array to selectively effect a brake mode and a non-brake mode, wherein in the brake mode the magnetic array induces eddy currents in the electrically conductive body to cause a magnetic braking force therein when the rotor rotates above a threshold speed and in the non-brake mode the induced eddy currents cause a negligible or no magnetic braking force as the rotor rotates above the threshold speed.

In some example embodiments, the magnetic brake assembly further includes a friction brake that is actuatable to apply a friction braking force on the rotor. In some examples, the friction brake is actuated by the actuator to apply the friction braking force after the magnetic braking force is applied on the rotor.

The plurality of magnets comprises a plurality of permanent magnets and a plurality of electromagnets, and the actuator comprises an electrical relay that turns on the plurality of electromagnets in the brake mode and turns off the plurality of electromagnets in the non-brake mode. In some examples, the plurality of electromagnets and the plurality of permanent magnets are arranged circumferentially in a circular Halbach array such that the magnetic flux of the magnetic array is substantially one-sided and in a direction substantially perpendicular to the magnetic array when at least some of the plurality of electromagnets are turned on. The placement and configuration of the plurality of electromagnets within the magnetic array is such that the polarity of at least some of the plurality of electromagnets when turned on determines which side of the magnetic array experiences a substantially greater magnetic flux.

In some example embodiments, the actuator comprises a mechanical actuator that is configured to effect the brake mode and the non-brake mode by changing a relative position of the magnetic array and the electrically conductive body by positioning the magnetic array and the electrically conductive body closer together to increase the amount of induced eddy currents to effect the brake mode and positioning them further apart to decrease the amount of induced eddy currents to effect the non-brake mode.

In some example embodiments, the mechanical actuator is configured to move the stator axially towards the rotor along the rotational axis of the wheel rim to effect the brake mode and axially away from the rotor to effect the non-brake mode.

In some example embodiments of the first aspect, the magnetic brake assembly includes a non-rotating base, wherein the rotor comprises the electrically conductive body, the stator comprises the magnetic array, and the stator is slidably mounted on the non-rotating base, the mechanical actuator being configured to move the stator relative to the rotor along the non-rotating base to vary the magnetic braking force effected on the rotor. In some examples, the mechanical actuator comprises at least one linear displacer operably connected with the stator for axially moving the stator along the non-rotating base.

In some example embodiments, the non-rotating base comprises a member having a circular cross-section and the stator has a central hole sized to fit on the member of the non-rotating base, the non-rotating base and the stator having mateable splines such that the stator is capable o resisting a torque applied about the rotational axis of the wheel rim.

In some example embodiments, the plurality of magnets comprises a plurality of permanent magnets, and the plurality of permanent magnets are arranged circumferentially in a circular Halbach array such that the magnetic flux of the magnetic array is substantially one-sided and in a direction substantially perpendicular to the magnetic array.

In some example embodiments, the magnetic brake assembly includes a first friction element connected with the rotor and a second friction element connected with the stator and configured to mutually engage to effect a friction braking force on the rotor when the actuator moves the stator within a predetermined distance of the rotor.

In some example embodiments of the first aspect, the rotor comprises the electrically conductive body, the stator comprises the magnet array, and the magnetic array comprises a plurality of magnets that are movable in a radial direction with respect to the rotational axis, the mechanical actuator being configured to move the each of the plurality of magnets radially from an outer radial position to an inner radial position to effect the brake mode. A distance between each of the plurality of magnets and the rotor is greater at the outer radial position than at the inner radial position. In some examples, each of the plurality of magnets is flexibly biased in the outer radial position and are moved to the inner radial position by action of the mechanical actuator.

In some example embodiments, the magnetic brake assembly includes a non-rotating base having an elongate portion, the elongate portion being cylindrical and having a helical spline on a surface thereof. The assembly also includes a sleeve slidable along the elongate portion and having an internal helical groove sized and shaped to mate with the helical spline on the elongate portion for causing the sleeve to rotate around an axis of the elongate portion when sliding axially therelong. In some examples, the mechanical actuator is configured to move the sleeve axially along the elongate portion between a deactivated state and an activated state, and the plurality of magnets are connected with the sleeve and are movable between the outer radial position and the inner radial position with the rotation of the sleeve around the axis of the elongate portion by means of a plurality of members connecting the plurality of magnets to the sleeve.

In some example embodiments, the magnetic brake assembly has a rotor with at least one brake pad attached thereto, the sleeve has a circular disc at an end thereof, and in the activated state, the circular disc frictionally engages the brake pad for producing a frictional braking effect therewith.

In some example embodiments, the magnetic brake assembly includes multiple sets of stators and rotors actuatable between the brake mode and the non-brake mode, wherein for each set, one of the rotor and stator comprises an electrically conductive body and the other of the rotor and stator comprises a magnetic array comprising a plurality of magnets configured to generate a magnetic flux.

In some example embodiments, the electrically conductive body is embedded with one or more ferromagnetic cores configured to increase the magnetic flux through the electrically conductive body when the brake mode is effected.

### BRIEF DESCRIPTION OF THE DRAWINGS

Some embodiments of the present invention are illustrated as an example and are not limited by the figures of the accompanying drawings, in which like references may indicate similar elements, parts, assemblies, or concepts.
**FIG. 1** is a perspective view of an individual permanent arc magnet.
**FIG. 2** is a perspective view of an irregularly shaped concave permanent magnet.
**FIG. 3** is a perspective view of an irregularly shaped convex permanent magnet.
**FIG. 4** depicts a radial permanent magnet array comprised of a plurality of arc magnets such as the one shown in **FIG. 1****,** arranged in a circumferential Halbach configuration such that the magnetic flux of the magnet array is substantially one-sided towards a corresponding rotor, the magnetic field orientation of each individual magnet labelled, in accordance with an embodiment of the present invention.
**FIG. 5** depicts a hybrid permanent magnet - electromagnetic radial array comprised of a combination of permanent arc magnets and electromagnets, arranged in a circumferential Halbach configuration such that the polarity of the electromagnets when turned on determines which side of the magnet array will experience a substantially greater magnetic flux, in accordance with another embodiment of the present invention.
**FIG. 6** is an isometric view of a stator assembly including the radial permanent magnet array of **FIG. 4****,** in accordance with an embodiment of the present invention.
**FIG. 7** is an exploded isometric view of the stator assembly of **FIG. 6****.**
**FIG. 8** is an isometric view of a configuration of four electric linear actuators arranged around a shaft, in accordance with an embodiment of the present invention.
**FIG. 9** is an isometric view of the stator assembly of **FIG. 6** operably connected to an electric linear actuator in a retracted configuration, in accordance with an embodiment of the present invention.
**FIG. 10** is an isometric view of a non-rotating base portion, in accordance with an embodiment of the present invention.
**FIG. 11** is an exploded isometric view of the non-rotating base portion of **FIG. 10** in conjunction with the configuration of electric linear actuators of **FIG. 8****,** in accordance with an embodiment of the present invention.
**FIG. 12** is an isometric view of the non-rotating base portion of **FIG. 10** with each of the electric linear actuators of the configuration shown in **FIG. 8** operably connected to the non-rotating base portion and housed therein, in accordance with an embodiment of the present invention.
**FIG. 13** is an isometric view of a rotor assembly, in accordance with an embodiment of the present invention.
**FIG. 14** is an exploded isometric view of an axially actuated permanent magnet eddy current brake assembly, in accordance with an embodiment of the present invention.
**FIG. 15** is an exploded isometric view of the brake assembly of **FIG. 14** shown in conjunction with the configuration of electric linear actuators of **FIG. 8** and the non-rotating base portion of **FIG. 10****,** in accordance with an embodiment of the present invention.
**FIG. 16A** is an isometric view of an axially actuated permanent magnet eddy current brake in the fully disengaged position, in accordance with an embodiment of the present invention.
**FIG. 16B** is an isometric view of the other side of the brake of **FIG. 16A** in the fully disengaged position.
**FIG. 16C** is a close-up side view of the brake of **FIG. 16A** in the fully disengaged position.
**FIG. 17A** is an isometric view of the axially actuated permanent magnet eddy current brake of **FIGS. 16A-16C****,** but in the fully engaged position, in accordance with an embodiment of the present invention.
**FIG. 17B** is an isometric view of the other side of the brake of **FIG. 17A** in the fully engaged position.
**FIG. 17C** is a close-up side view the brake of **FIG. 17A** in the fully engaged position.
**FIG. 18A** is a close-up side view of an axially actuated permanent magnet eddy current brake featuring a single rotor and two stators in the fully disengaged position, in accordance with an embodiment of the present invention.
**FIG. 18B** is a close-up side view of the single rotor and two stators of **FIG. 18B****,** but in the fully engaged position.
**FIG. 19A** is an isometric view of a hybrid permanent magnet - electromagnetic eddy current brake assembly featuring the circumferential Halbach array comprised of both permanent magnets and electromagnets of **FIG. 5****,** in accordance with an embodiment of the present invention.
**FIG. 19B** is a side view of the hybrid permanent magnet - electromagnetic eddy current brake assembly of **FIG. 19A****.**
**FIG. 20** is an exploded isometric view of a rotor attached to an aircraft wheel rim with the axle passing through the wheel, in accordance with an embodiment of the present invention;
**FIG. 21** is a side perspective view of the embodiment of **FIG. 20****.**
**FIG. 22** is an exploded isometric view of a radially actuated permanent magnet eddy current brake assembly, shown separate from the rotor and aircraft wheel rim of **FIG. 20****,** in accordance with an embodiment of the present invention.
**FIG. 23** is a front perspective view of the radially actuated permanent magnet eddy current brake assembly of **FIG. 22** in the fully disengaged position, in accordance with an embodiment of the present invention.
**FIG. 24** is an isometric view of the radially actuated permanent magnet eddy current brake assembly of **FIG. 22** shown operably connected to an aircraft wheel and in the fully disengaged position, in accordance with an embodiment of the present invention.
**FIG. 25** is a front view of the radially actuated permanent magnet eddy current brake of **FIG. 24** in the fully disengaged position, in accordance with an embodiment of the present invention.
**FIG. 26** is a front view of the radially actuated permanent magnet eddy current brake of **FIG. 24** in the fully disengaged position and with the external brake housing removed.
**FIG 27** is a front view of the configuration of magnets used in the radially actuated permanent magnet eddy current brake of **FIG. 24** in the fully disengaged position and with the external braking housing and other components removed.
**FIG. 28** is a close-up isometric view of a spring-magnet assembly attached to an actuation cable in the fully disengaged position, the assembly being part of the radially actuated permanent eddy current brake of **FIG. 24**, in accordance with an embodiment of the present invention.
**FIG 29** is a close-up side view of part of the actuation mechanism to the radially actuated permanent magnet eddy current brake of **FIG. 24** in the fully disengaged position, in accordance with an embodiment of the present invention.
**FIG. 30** is a front view of the radially actuated permanent magnet eddy current brake of **FIG. 24** in the fully engaged position, in accordance with an embodiment of the present invention.
**FIG. 31** is a front view of the radially actuated permanent magnet eddy current brake of **FIG. 24** in the fully engaged position and with the external brake housing removed.
**FIG 32** is a front view of the configuration of magnets used in the radially actuated permanent magnet eddy current brake of **FIG. 24** in the fully engaged position and with the external braking housing and other components removed.
**FIG. 33** is a close-up isometric view of a spring-magnet assembly attached to an actuation cable in the fully engaged position, the assembly being part of the radially actuated permanent eddy current brake of **FIG. 24****,** in accordance with an embodiment of the present invention.
**FIG. 34** is a close-up side view of part of the actuation mechanism to the radially actuated permanent magnet eddy current brake of **FIG. 24** in the fully engaged position, in accordance with an embodiment of the present invention.
**FIG. 35** is a front view of an arrangement of arc magnets in a circumferential Halbach array such that the magnetic flux of the magnet array is substantially one-sided towards a corresponding rotor, with the external housing and other components removed and the magnetic field orientation of each individual magnet labelled, in accordance with an embodiment of the present invention.
**FIG. 36** is a rear view of a rotor assembly comprising a rotor with an embedded ferromagnetic core, in accordance with an embodiment of the present invention.
**FIG. 37** is a rear view of a rotor assembly comprising a rotor with multiple separate ferromagnetic cores embedded inside, in accordance with an embodiment of the present invention.

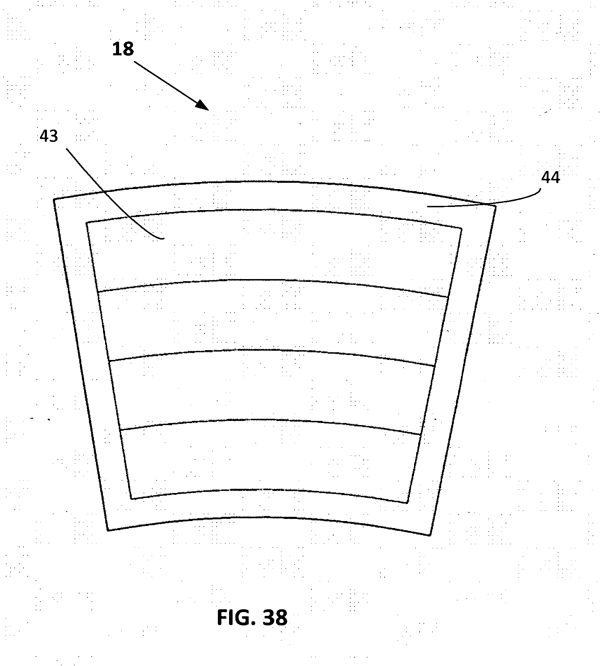

**FIG. 38** is a front view of one example of a magnet assembly comprising multiple smaller arc magnets fixedly retained within a rigid holder, in accordance with some embodiments of the present invention.

### DETAILED DESCRIPTION OF THE EMBODIMENTS

The terminology used herein is for the purpose of describing particular embodiments only and is not intended to be limiting of the invention.

As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises" and/or "comprising" and/or "may be", when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present invention and will not be interpreted in an idealized or overly formal sense unless expressly so defined herein.

In this invention, the terms "magnetic brake", "magnetic brake assembly", "eddy current brake", and "eddy current magnetic brake" are used interchangeably. All refer to a brake assembly that utilizes magnets to induce eddy currents in an electrically conductive body, which in example embodiments may be a rotor.

In this invention, the terms "deactivated state", "disengaged position", "disengaged mode", "brake off", "off configuration", and "non-brake mode" all refer to a mode of operation of the magnetic brake in which the magnets or electromagnets induce little or no eddy currents in an electrically conductive body.

In this invention, the terms "activated state", "engaged position", "engaged mode", "brake on", "on configuration", and "brake mode" all refer to a mode of operation of the magnetic brake in which the magnets or electromagnets induce significant eddy currents in an electrically conductive body so as to produce a magnetic braking force on the electrically conductive body..

Eddy current braking systems for aircraft are discussed herein. In the following description, for purposes of explanation, some specific details are set forth in order to provide as thorough an understanding of the present invention as possible. It will be evident, however, to one skilled in the art that the present invention may be practiced without these specific details.

The present invention relates to the application of Halbach permanent magnet arrays to eddy current braking systems. The present invention also relates to the application of electromagnets within Halbach permanent magnet arrays in order to achieve brake control. More specifically, the present invention relates to the use and method of actuation of permanent magnet arrays or hybrid permanent magnet - electromagnet arrays in an eddy current braking system with an integrated friction brake actuated by the same means. The present invention presents example embodiments that may be specific to certain applications, however it will be clear to one skilled in the art that the invention may also be practiced in other applications.

The present invention is to be considered as an exemplification of the invention, and is not intended to limit the invention to the specific embodiments illustrated by the figures or descriptions below.

The present invention will now be described by general explanation and by referencing the appended figures representing preferred embodiments. Some figures are labelled while some figures are described holistically with reference to self-evident components or assemblies shown in the figures. For all non-labelled figures, the components or assemblies shown in the figures will have been labelled in previous figures of the same components or assemblies and will be immediately obvious. For all other figures, the components or assemblies discussed will be evident to one skilled in the art.

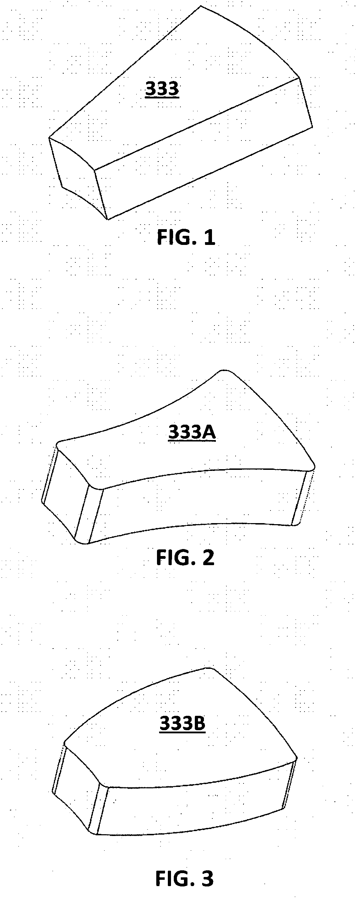

**FIG. 1** depicts an arc magnet **333** which is a neodymium iron boron (NdFeB) N42 grade high-strength arc magnet, for use in some embodiments of the present invention.

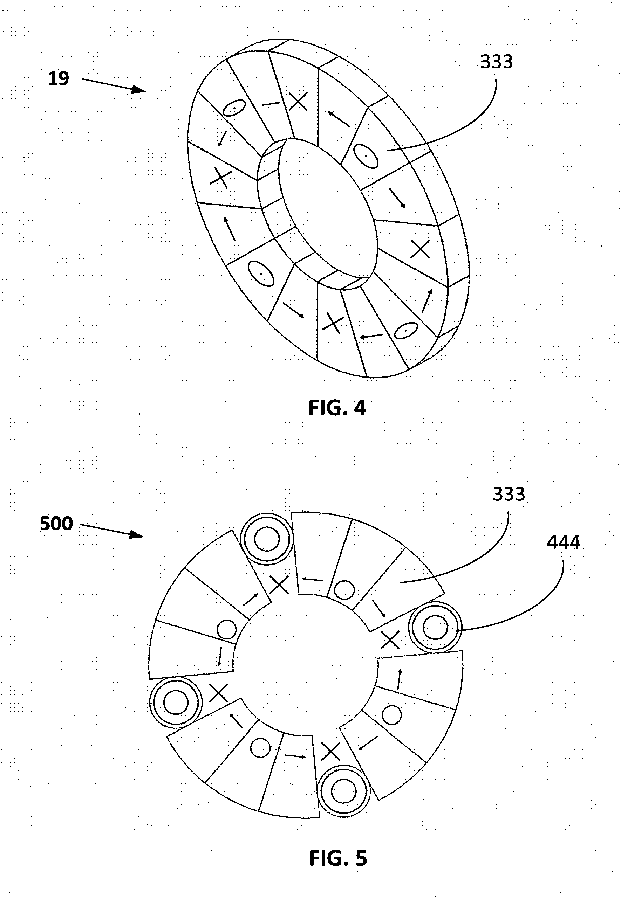

In some embodiments of the present invention, the permanent magnets used may be cubes, rectangular prisms, cylinders, discs, or they may be irregularly shaped. With reference to **FIG. 2****,** the magnet **333A** shown is an irregularly shaped concave permanent magnet. With reference to **FIG. 3****,** the magnet **333B** is an irregularly shaped convex permanent magnet. The permanent magnets **333, 333A** and **333B** may be arranged in radial Halbach magnet arrays (hereinafter "magnet arrays"). For example, with reference to **FIG. 4****,** there is shown a magnet array **19** comprised of 16 of the permanent arc magnets **333** of **FIG. 1****.** The magnets in a Halbach array are arranged in a circle with their magnetic flux oriented in a particular way to produce a strong magnetic flux on one side of the magnet array. In **FIG. 4****,** magnets marked with an "X" have their flux into the page, magnets marked with an "O" have their flux coming out of the page, and other magnets have an arrow showing the direction of their flux. This arrangement produces a strong magnetic flux on one side of the magnet array **19.** The magnet array **19** may be used as part of a stator.assembly of a magnetic brake as will be explained below.

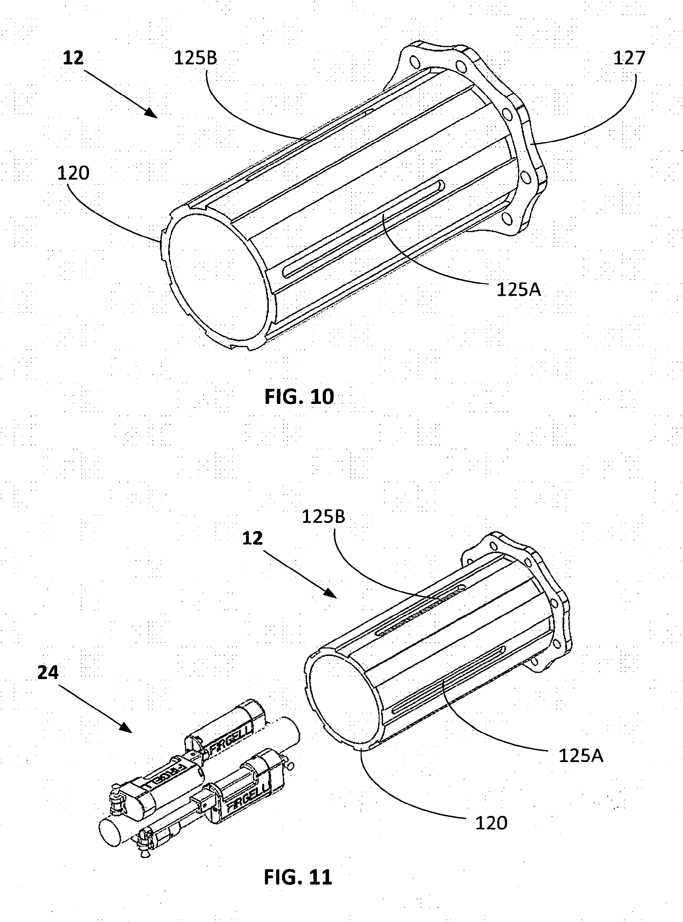

**FIG. 5** shows a magnet array **500** comprised similar to magnet array **19** but some of the permanent magnets **333** have been replaced by electromagnets **444,** thus forming hybrid permanent magnet - electromagnet array **500.** In the preferred embodiment of the present invention, electromagnets **444** replace the permanent magnets **333** at the array indices shown in **FIG. 5****.** The electromagnets **444** are in the positions that correspond to a magnetization direction substantially through an adjacent rotor. In the configuration shown in **FIG. 10****,** the electromagnets **444** complete the Halbach array pattern when turned on and thereby cause the magnetic flux of the resultant array **500** to be substantially one-sided with little magnetic flux on the opposite side of the array. In some embodiments of the present invention, this may enable a fast response time between the brake on and brake off states, allowing for implementation of anti-lock braking systems.

In other embodiments of the present invention, the pole projection areas of the electromagnets **444** may be arcs, squares, ovals, or other irregular shapes. In the preferred embodiment of the present disclosure, the shape of the electromagnets **444** is an arc and is as similar as possible to the shape of the permanent magnets **333** in the same array **500.** This may allow for greater interaction between the electromagnets **444** and the two adjacent permanent magnets **333.**

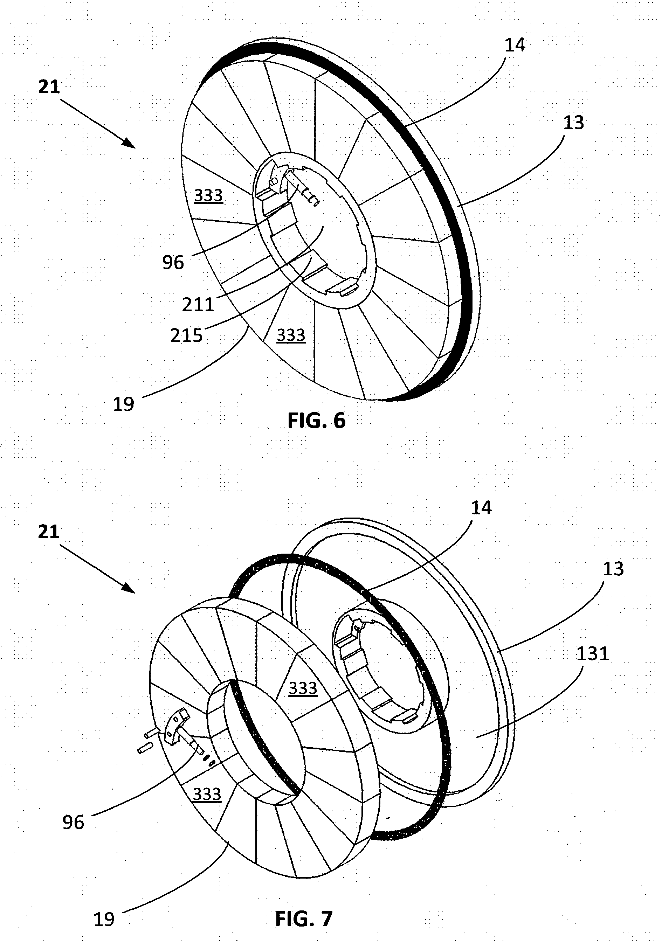

**FIGS. 6** and **7** depict a stator assembly **21** ("stator") for use in the magnetic braking system disclosed herein. In one embodiment, the stator assembly **21** comprises a stator base **13,** a magnet array **19** such as the one shown in **FIG. 4****,** and a stator friction ring **14.**

The stator base **13** shown is in the form of a circular disc having a rotor-facing side **131** and a circular hole **211** provided with a plurality of splines **215.** The hole **211** is sized to fit on a base member, and the splines **215** are arranged to mate with corresponding splines of the base member when the stator **21** is mounted thereon.

The magnet array **19** is attached to the rotor-facing side **131** of each stator base **13.** In one embodiment, the magnets **333** of magnet array **19** are secured to the stator base **13** in tight grooves cut into the body of the stator base **13.** In some embodiments, the magnet array **19** may be coated with a thin layer of thermal insulative material to protect its surface from scratching, heat, and other environmental conditions. In other embodiments, the magnet array **19** may be covered with another protective or securing component. In some embodiments, the magnets **333** may be inserted from the outer side of the stator base **13** into hollow openings precut into the stator base **13** such that their surfaces are partly or entirely contained within the stator base **13.** The Halbach pattern of each magnet array **19** is such that it concentrates the magnetic flux produced by the magnets **333** on the exposed face of the magnet array **19,** directed towards a corresponding rotor

A stator friction ring **14** is disposed on the outer circumference of the stator base **13** on the rotor-facing side **131,** surrounds the magnet array **19** and is concentric therewith. In one embodiment, the stator friction ring **14** is a ring of carbon friction material placed immediately at the outer radius of the magnet array **19.**

A connection member **96** extends from the stator base **13** and is suitable for engaging an actuator. In the embodiment shown the connection member **96** is radially oriented and extends into the circular hole **211** in substantially the same plane as the stator **21.** In the example shown, the connection member **96** features a cylindrical rod, but may be any other shape or configuration.

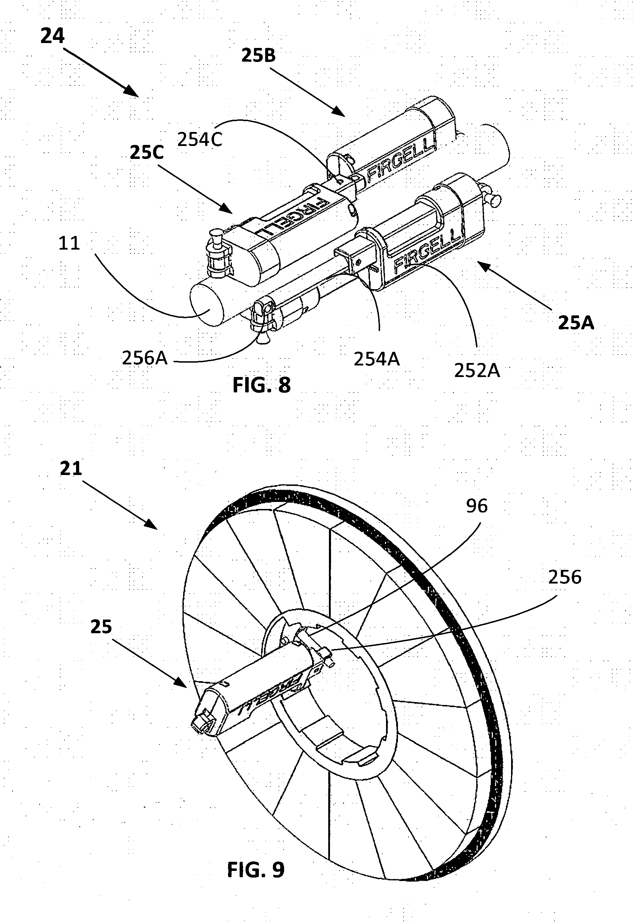

**FIG. 8** shows a mechanical actuator configuration **24.** The mechanical actuator configuration **24** is comprised of four electrically or hydraulically powered linear actuators of which three actuators **25A, 25B** and **25C** (collectively linear actuators "**25**") are visible. The actuators are shown connected with an axle **11.** Each of the linear actuators has an actuation member, an actuation rod, and a connection tip. For example, linear actuator **25A** has an actuating member **252A,** an actuation rod **254A,** and a connection tip **256A.** The actuation member converts electrical energy to a linear displacement of the actuation rod. Accordingly, the linear actuators may also be referred to as "linear displacers". For example, the actuation member may extend or retract a corresponding actuation rod. The operation of the actuation member is known in the art and will not be described in detail in this disclosure. The linear actuator **25A** is shown in extended mode with the actuation rod **254A** extended away from the actuation member **252A.** Conversely the linear actuator **25C** is show in retracted mode. Each actuation rod ends with a connection tip. For example, the actuation rod **254A** of linear actuator **25A** ends with the connection tip **256A.** When activated linear actuators **25** can move their corresponding connection tip axially parallel to the axle **11.**

**FIG. 9** shows a single electrical linear actuator **25** having its connection tip **256** connected with connection member **96** of stator assembly **21.** Accordingly activating the linear actuator **25** may move the stator **21** axially towards or away from the linear actuator **25.** Hence, **FIG. 8** shows a linear actuator configuration **24** suitable for engaging four stators.

With reference to **FIGS. 10-12** a non-rotating base portion **12** for use in the magnetic brake assembly is shown. In one embodiment, the non-rotating portion **12** is bolted to a non-rotating part of the vehicle's structure. The non-rotating portion **12** comprises a tubular cylindrical member which features a plurality of splines **120** and a flange **127.** The splines **120** are for receiving and allowing a plurality of stators having a central circular hole with mating splines to slide axially along the length of the non-rotating base portion **12.** The mating of the splines **120** with corresponding splines on stators such as stator assembly **21** resists any torque applied to the stators **21.** In one embodiment, the non-rotating base portion **12** features slots **125** (only slots **125A** and **125B** are visible). The slots **125** permit air flow, but may have other purposes as will be described below. The non-rotating base portion **12** may end with a flange **127** at one end thereof. The flange **127** may help retain stators mounted on the base portion **12.**

The electric linear actuators of the linear actuator configuration **24** may be compactly nested inside of the non-rotating base portion **12,** between the inner wall and the axle **11.** The electric linear actuators may be secured in holders, which are in turn fixed to the inside of the non-rotating base portion **12.** The example configuration shown allows for a space efficient and compact design that fits within an existing brake envelope of a vehicle. In one embodiment, the connecting tip of each of the four linear actuators is aligned with a corresponding slot **125.** Accordingly, a stator **21** may be inserted over the non-rotating portion **12** such that the connection member **96** of the stator **21** engages the connection tip **256** of the linear actuator (as shown earlier in **FIG. 9**) through a corresponding slot **125.** As a result, the actuator **25** may slide the stator **21** axially along the non-rotating portion **12.**

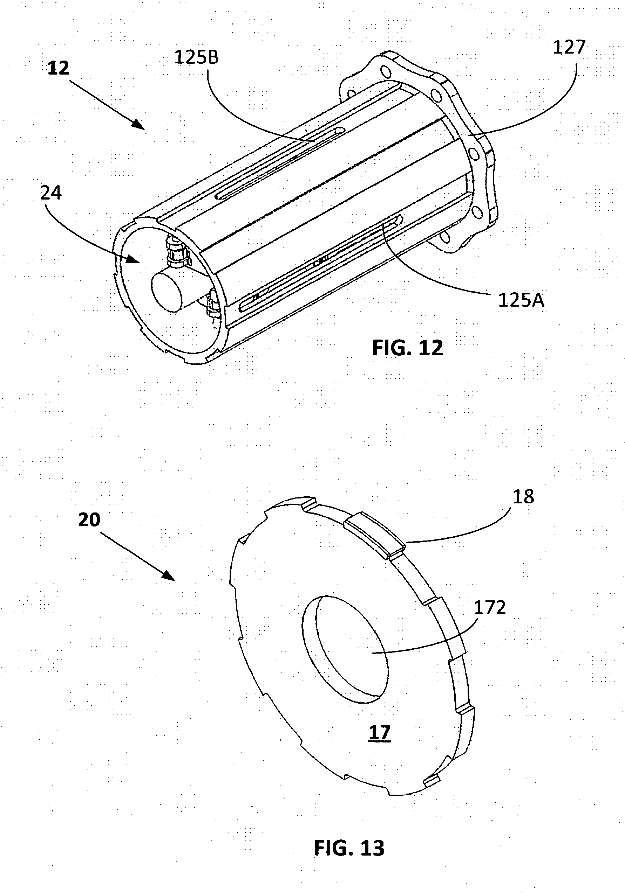

**FIG. 13** shows a rotor assembly **20,** in accordance with an embodiment of the present disclosure. The rotor assembly **20** is comprised of a rotor **17** and one or more sacrificial anodes 18. The rotor **17** is in the form of a circular disc having a central circular hole **172.** In example embodiments, the rotor 17 comprises an electrically conductive body. For the example the rotor 17 may be formed from a highly electrically conductive material. The circumference of the rotor **17** has one or more keys **174.** High temperature sacrificial anodes **18** may be attached to one or both sides of one or more keys **174** on the rotors **17** for protecting the rotors against corrosion. In the embodiment shown, there are two sacrificial anodes **18** affixed to both side of a key **174.** The sacrificial anodes **18** may be replaced in the event of wear, corrosion, etc. The rotor **17** is configured to be keyed into the rim of a wheel and rotates with the tire. The electrically conductive body of rotor **17** may be made partly or entirely from copper, aluminum, beryllium, or alloys or composites thereof, or any other high electric conductivity, high heat capacity material.

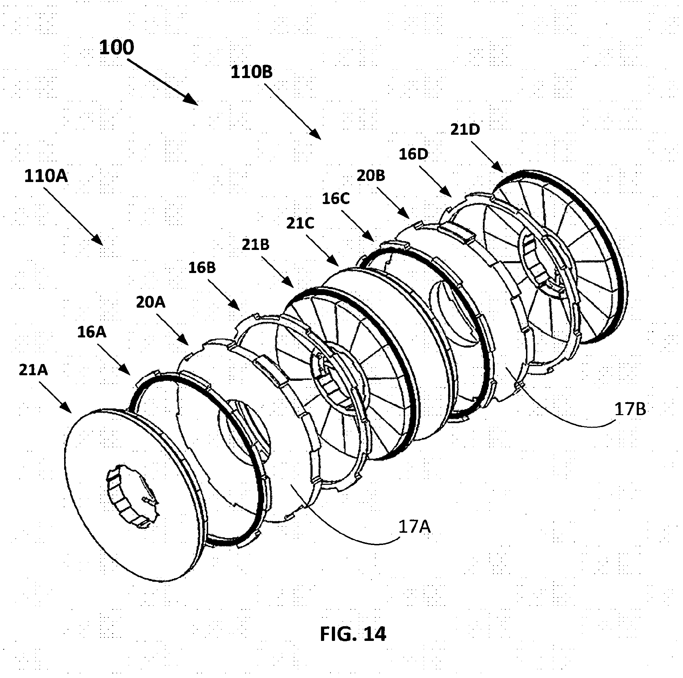

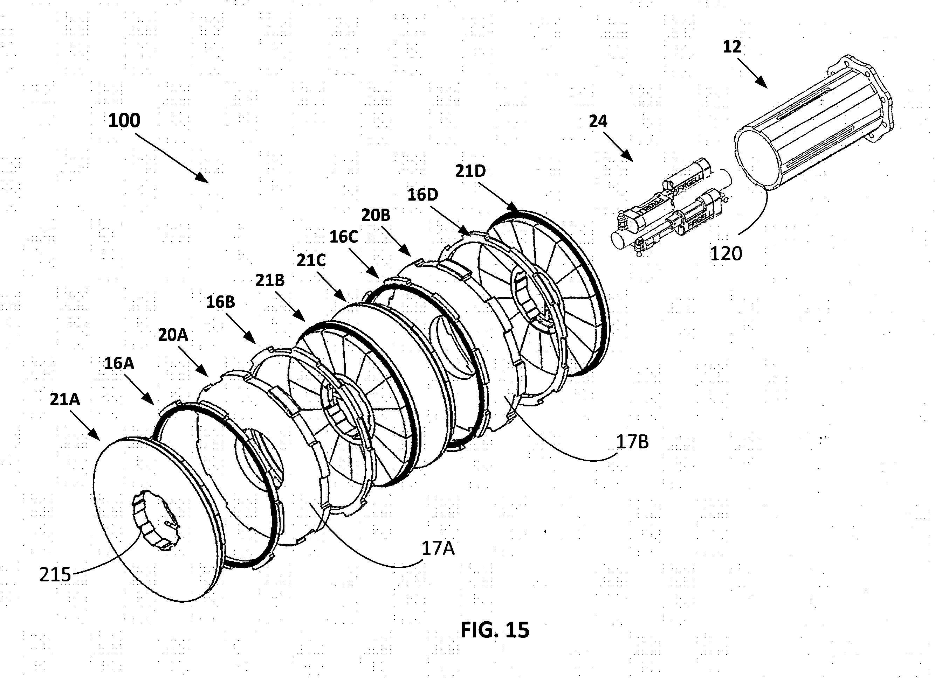

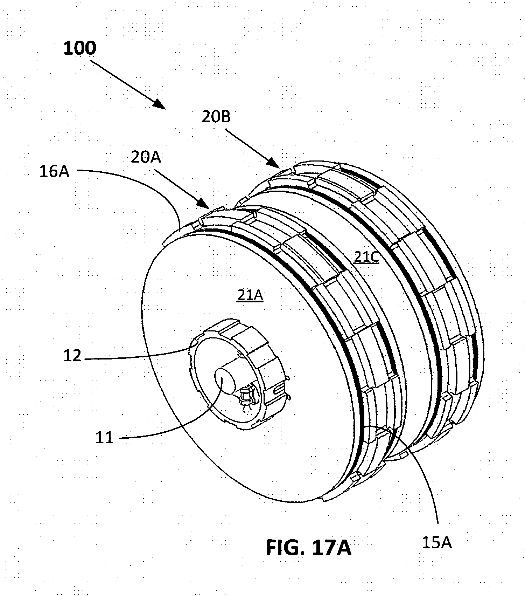

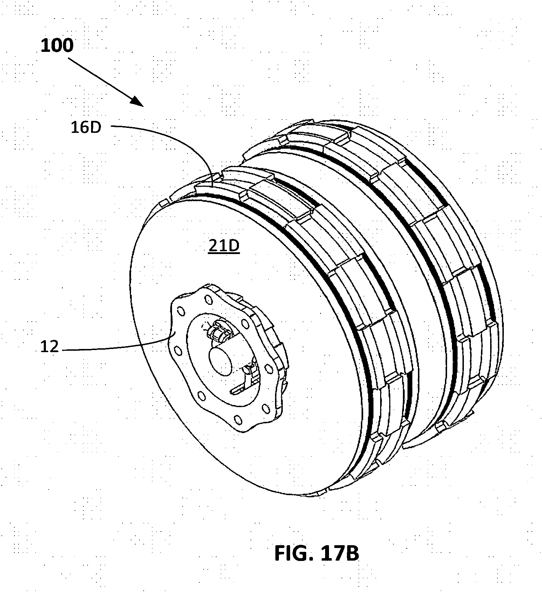

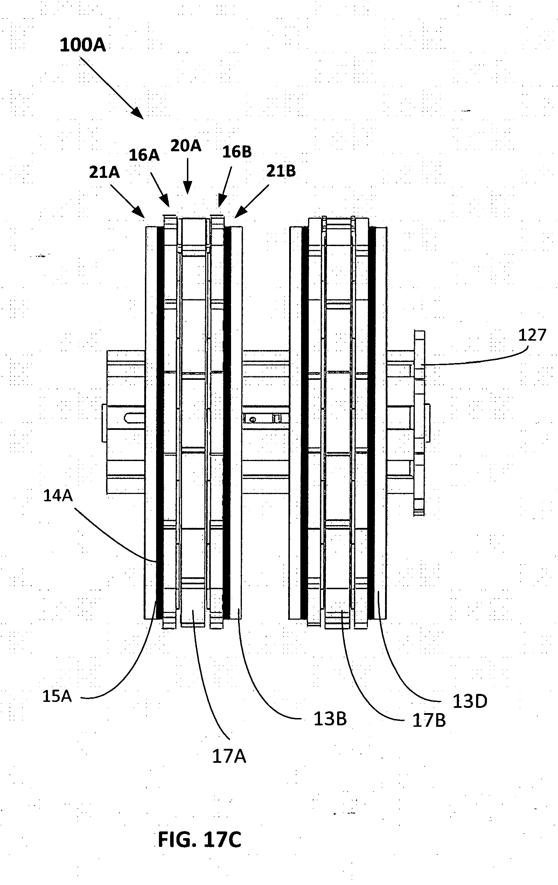

With reference to **FIGS. 14-15****,** **16A-16C,** and **17A-17C** there is shown an axially actuated magnetic brake assembly **100.** The magnetic brake assembly **100** shown is comprised of two identical magnetic brake sub-assemblies **110A** and **110B** (collectively "**110**"). Each of the magnetic brake sub-assemblies **110** is comprised of a rotor assembly, two stators, and two friction rims. For example, brake sub-assembly **110A** is comprised of the rotor assembly **20A** including the rotor **17A,** the two magnet carrying stators **21A** and **21B,** and the two friction rims **16A** and **16B.** The magnetic brake sub-assembly **110B** has a similar structure and is comprised of the rotor assembly **20B** including rotor **17B,** the two magnet carrying stators **21C** and **21D,** and the two friction rims **16C** and **16D.** The brake sub-assemblies **110A** and **110B** are mounted on the non-rotating base portion **12** in which the linear actuator configuration **24** has been inserted. The non-rotating base portion **12** is in turn fixedly attached to a non-rotating part of a vehicle's structure. In some embodiments, the non-rotating base portion is fixed to a static anchor point such as a floor or another non-rotating support structure. The magnetic brake assembly **100** is shown in conjunction with an axle **11,** which is not part of the magnetic brake assembly **100.** In one embodiment, the axle **11** is a vehicle wheel axle. In other embodiments of the present disclosure, the axle **11** may be the drive shaft of a vehicle. In other embodiments of the present disclosure, the axle **11** may be a rotating shaft belonging to a piece of machinery or other industrial equipment.

The two rotors **17A** and **17B** (collectively "**17**)" are configured to each spin with a wheel, such as an airplane wheel. The central holes of the rotors **17** are large enough that the rotors **17** may spin freely while mounted on the non-rotating base portion **12.** In some embodiments, the rotors are keyed to the inside of the wheel rim such that they spin at the same speed as the wheel. The rotors preferably are thick enough to collectively absorb the entirety of the vehicle's kinetic energy without increasing their temperature to a high enough point that the electric conductivity of their constitutive material is excessively reduced.

The four stators **21A, 21B, 21C,** and **21D** (collectively "**21**") mounted on the non-rotating base portion **12** such that the splines **215** formed in the central hole of the stators **21** mate with the splines **120** of the non-rotating base portion thus preventing the stators from rotating even under a torque force. The stators **21** are oriented such that the corresponding magnet array directs its flux towards a rotor. For example, stator **21A** is oriented such that the magnet array mounted thereon faces the rotor **17A** and directs its flux towards the rotor **17A.** Similarly, the stator **21B** is oriented such that the magnet array mounted thereon faces the rotor **17A** and directs its flux towards the rotor **17A.** The stators **21** are operably connected to corresponding linear actuators of the actuator configuration **24** such that each of the four stators **21** is axially slidable along the non-rotating base portion **12** under action of the corresponding linear actuator so that brake assembly can be switched from a disengaged position to an engaged position and vice versa. The connection between each linear actuator and its corresponding stator is made through slots formed in the non-rotating base portion as discussed earlier. The linear actuators may each be activated by a controller through connections therebetween.

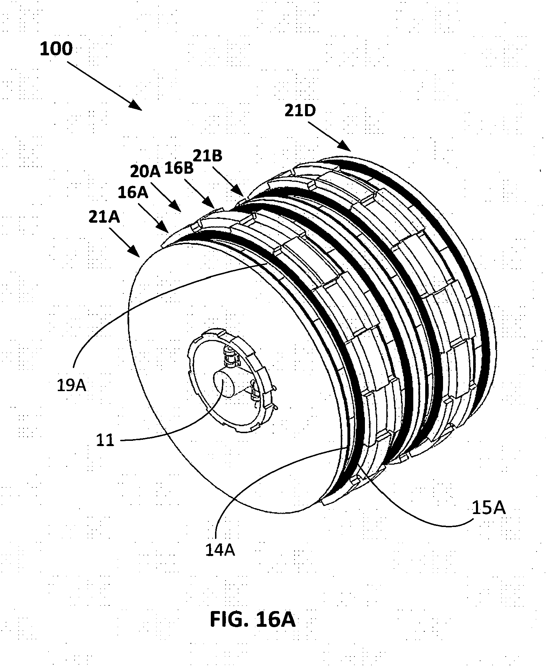

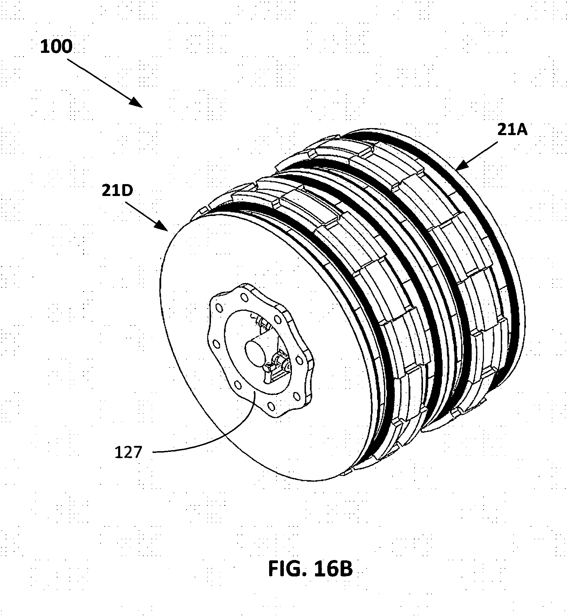

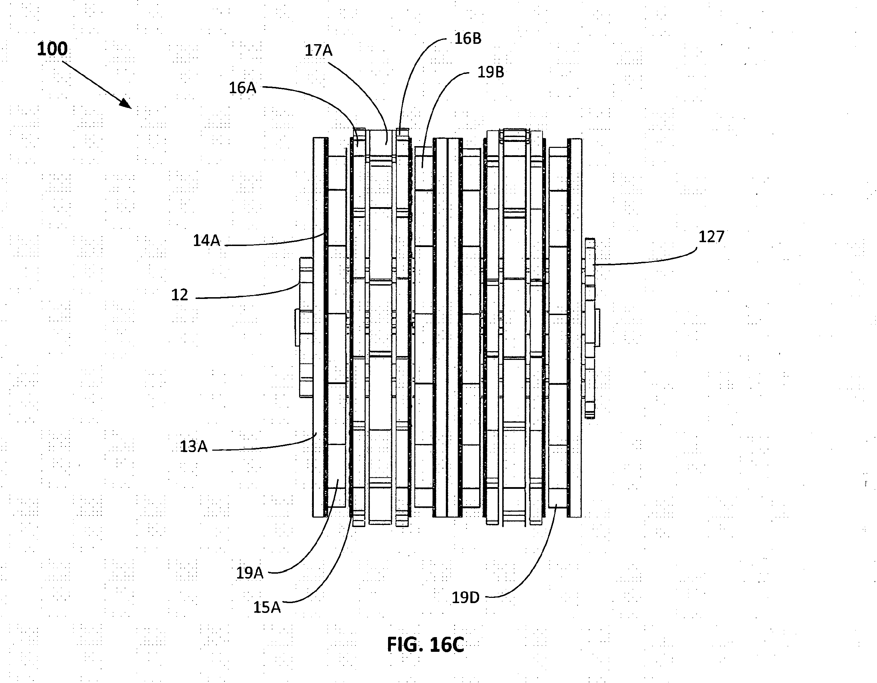

The stators **21A** and **21B** can each slide towards the rotor **17A** or slide away from it under the control of the linear actuator. In a disengaged position for the magnetic brake sub-assembly **110A,** the stator **21A** and **21B** are slid away from the rotor **17A,** as shown in **FIGS. 16A-16C**. In the disengaged position, as the rotor **17A** spins the magnetic flux directed towards the rotor **17A** by the stators **21A** and **21B** is too weak to induce sufficient eddy currents in the rotor **17A.** Thus no magnetic braking effect or force is experienced by the rotor **17A.** This disengaged position corresponds to a non-brake mode of the brake sub-assembly. To engage the brake sub-assembly **110A,** the stators **21A** and **21B** are each slid axially towards the rotor **17A.** Since the rotor has an electrically conductive body made of an electrically conducting material, the passage of the rotor **17A** through the magnetic field induce eddy currents in the rotor **17A.** The induced eddy currents in turn each produces a magnetic field that is in opposition to the magnetic field formed by the magnet arrays. The interaction between the two opposing magnetic fields produces a braking torque. The braking torque produced by the brake is controlled by varying the distance between the magnet arrays **19A** and **19B** and the associated rotor **17A.** Decreasing the distance between each of magnet array **19A** and magnet array **19B** and the rotor **17A** results in greater braking force, while increasing the distance between each of magnet array **19A** and magnet array **19B** and the rotor **17A** reduces the braking force. To fully disengage the brake, the distance between the magnet arrays **19A** and **19B,** and the corresponding rotor **17A** is increased until the magnetic flux felt by the rotor **17A** is negligible and there are almost no eddy currents generated in the rotor **17A.** The same operation described herein with respect to the brake sub-assembly **110A** also applies to the brake sub-assembly **110B.**

Accordingly, the actuator **25** is operably connected to the magnet array **19A** to selectively effect a brake mode and a non-brake mode, wherein in the brake mode the magnet array **19A** induces eddy currents in the electrically conductive body of the rotor **17A** to apply a magnetic braking force when the rotor **17A** rotates above a threshold speed and in the non-brake mode the induced eddy currents result in a negligible or no braking force, even when the rotor **17A** rotates above the threshold speed. Below the threshold speed the induced eddy currents will not be sufficient to result in a non-negligible magnetic braking force. The threshold speed will depend on the dimensions and configuration of the components of the brake assembly and can be readily determined.

In some embodiments of the present invention, to ensure adequate braking performance at low velocities where eddy current generation is minimal, a complementary friction brake may be integrated into the magnetic permanent magnet eddy current brake. The friction brake may supplement the performance of the non-contact magnetic brake at low velocities. In this embodiment of the present disclosure, friction braking may be performed using the same electric linear actuators used to engage and disengage eddy current braking. The friction brake may be implemented using aluminum friction rims, with one placed on either side of one or more rotors. For example, with reference to the brake sub-assembly **110A,** the friction rim **16A** is placed between the rotor assembly **20A** and the stator assembly **21A.** Similarly, the friction rim **16B** is placed between the rotor assembly **20A** and the stator assembly **21B.** In the depicted embodiment, the rims **16A** and **16B** (collectively "**16**") are keyed into the wheel and rotate with the tire. In another embodiment (not shown), the friction rims may be attached to the rotor **17A** or integral therewith. In yet another embodiment, the rotor may be coated with friction material at an outer circumference thereof. In the depicted embodiment, each rim **16** is padded with a layer of carbon friction material **15** on the side facing away from the corresponding rotor **17.** As best seen in the side views **16C** and **17C,** the carbon friction material **15A** and **15B** of the friction rings **16A** and **16B** align with the stator friction rings **14A** and **14B** of stators **21A** and **21B.** In the engaged mode, the carbon friction material **15A** of friction rim **16A** engages the stator friction ring **14A** of the stator **21A.** Similarly, the carbon friction material **15B** of the friction rim **16B** engages the stator friction ring **14B** of the stator **21B.** This generates a contact pressure between the two frictional surfaces **14** and **15,** thus creating a frictional force to slow the rotation of the wheel. In this embodiment of the present invention, the magnets **333** never come into contact with the rotors **17.**

As can be appreciated, in some embodiments of the present invention, magnetic braking commences as the stators **17** move axially towards the rotors **21.** Friction braking only takes effect when the stators **17** are in contact with the friction rims **16,** at the point where magnetic braking is in the fully activated state. Accordingly, the slowing down of the rotors **21** by magnetic braking takes place before friction braking occurs. The application of magnetic braking and friction braking may overlap, but as rotational speed decreases the friction braking effect will become proportionally larger than the magnetic braking effect.

In an example embodiment of the present invention, there are 16 neodymium arc magnets **333** in each magnet array **19** on each stator **21.** The shape of the magnets **333A** and **333B** may influence the generation and distribution of eddy currents within the rotor **17** and may improve braking performance. In other embodiments of the present invention, the magnets **333** may be of a different or non-uniform thickness, or the magnet array **19** may comprise magnets **333** of varying thicknesses.

In one embodiment, the linear electric actuators **25** may be of adequate positioning accuracy and precision, such that the braking force produced can be tightly controlled by operator input and/or a braking control system. The linear electric actuators **25** may allow for control even where the distances between the magnet arrays **19** and the corresponding rotors **17** are small.

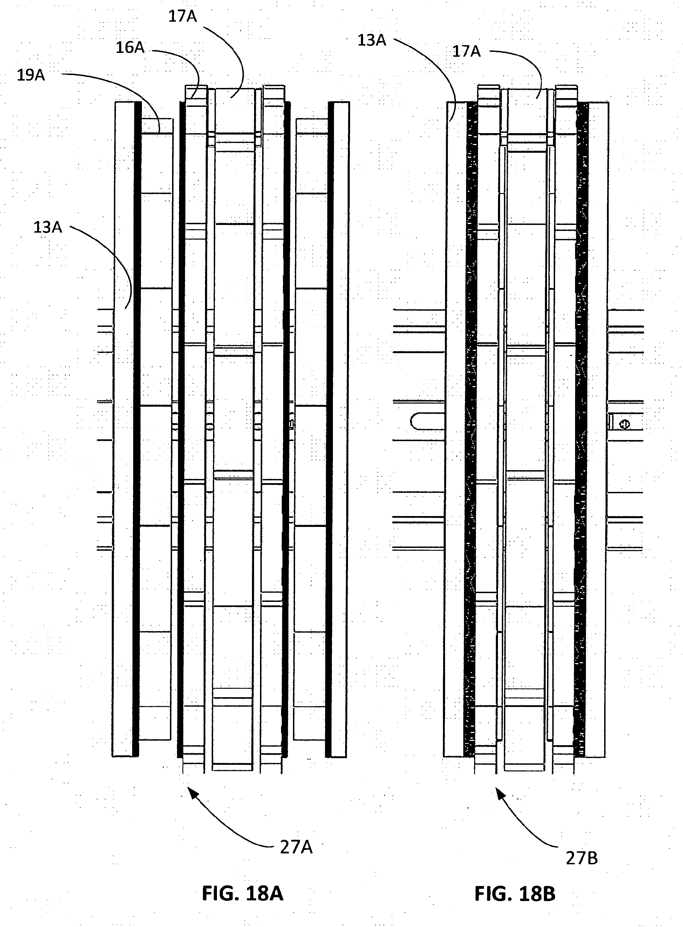

**FIGS. 1BA-18B** illustrate an example of a configuration of an embodiment of the present invention, in which there is a single rotor **17,** two friction rims, and two stators. In **FIG. 18A**, the distance between rotor and stators is greatest, and is represented by gap **27A. In** **FIG. 18B**, the distance is smallest and shown as gap **27B.**

In some embodiments (not shown) of the present invention, the magnetic brake may be disengaged by inserting a ferromagnetic screen between each magnet array and the corresponding rotor. The screens preferably are thin and flexible and made of a ferromagnetic material. The ferromagnetic screens may guide magnetic flux emanating from the magnet arrays away from the rotors, and may assist in disengaging the magnetic brake.

As discussed earlier, in example embodiments, the hybrid permanent magnet electromagnetic array **500** shown in **FIG. 5** is used instead of the magnet array of **FIG. 4****.** In some embodiments (not shown) of the present invention, the hybrid permanent magnet - electromagnet arrays **500** are moved by means of linear actuators while the individual electromagnets **444** are controlled by the flow of electrical current. In other embodiments of the present invention, the hybrid permanent magnet electromagnet arrays **500** arc static with respect to the non-rotating base portion **12,** and engaged or disengaged primarily by the flow of electrical current to the electromagnets **444**

In other embodiments of the present invention, the electric linear actuators **25** may be arranged circumferentially around the non-rotating base portion **12** on the outside and placed at the end of the non-rotating base portion **12** as is done in conventional carbon disc friction brakes common in the art.

In some embodiments of the present invention (not shown), the magnet array may be coated with a friction material and used as the primary friction surface against the rotor. In yet other embodiments, the complementary friction brake may be implemented using a separate single disc or drum friction brake or one or more conventional carbon disc brakes common in the art. In an example embodiment, the complementary friction brake may comprise conventional carbon disc brakes mounted in the nose landing gear of an aircraft.

The example embodiment for the complementary friction brake shown allows the same electric linear actuators to be used both for controlling primary eddy current braking functions and for supplementary friction braking at low speeds as well as for a parking brake function when the vehicle is fully stopped, or in other applications, for locking a rotating shaft in place. This embodiment of the present invention may ensure good frictional contact while maintaining a minimum distance between the magnets **333** and the rotors **17,** thus preventing any potential damage or wear to the magnets **333.**

Further embodiments of the magnetic permanent magnet eddy current brake described herein include using impact absorbing material to pad the magnets **333** and stators **21** to prevent shock-based demagnetization, using selective thermal insulation to protect the magnets **333** from heat, and increasing forced convection air flow through the use of active fans and other cooling systems integrated in the non-rotating base portion **12.**

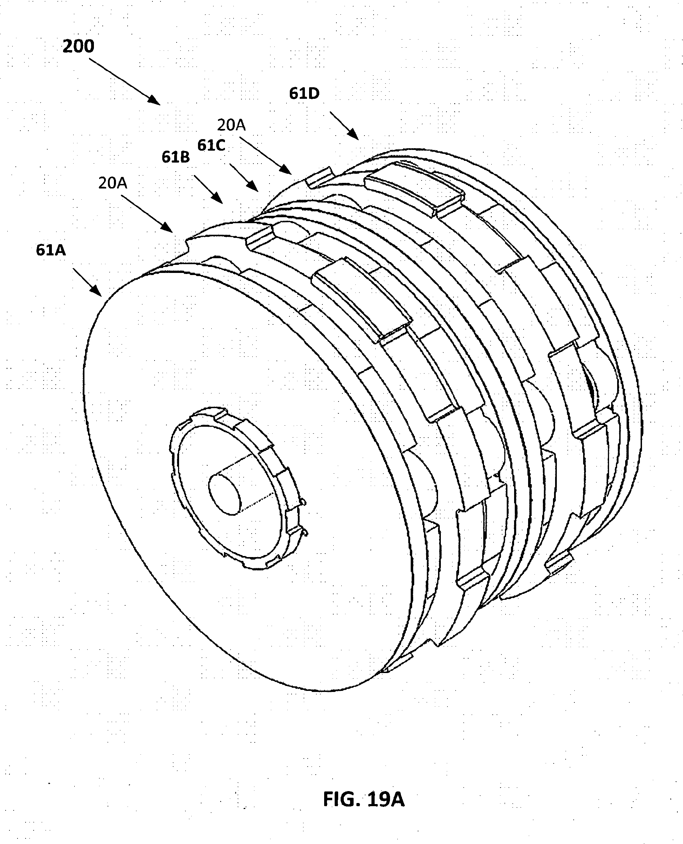

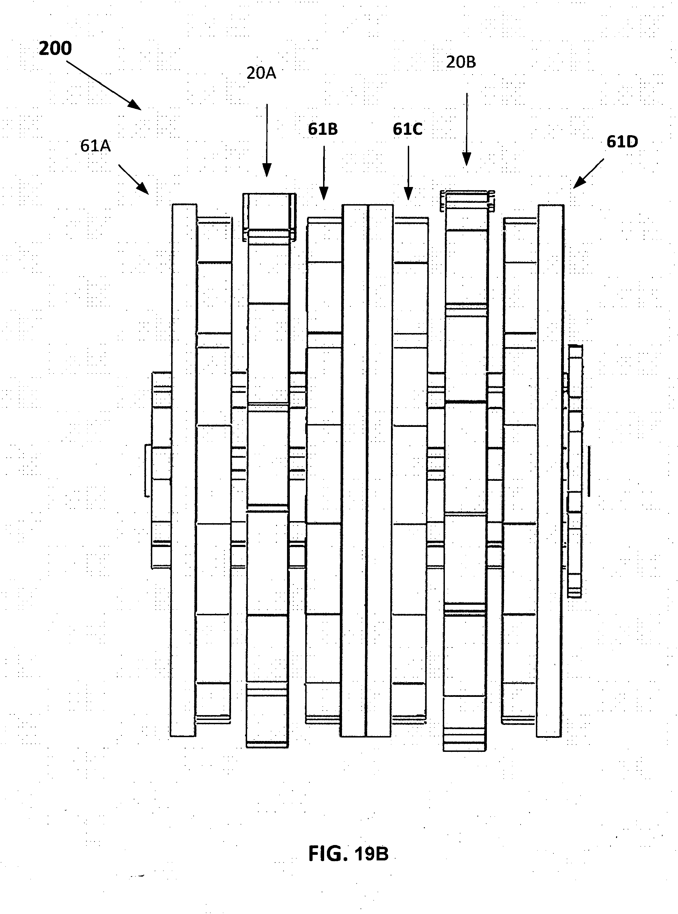

**FIGS. 19A** and **19B** depict an eddy current magnetic brake assembly in accordance with yet another embodiment of the present invention.

A brake assembly **200** is comprised of a rotor assembly **20A** and a rotor assembly **20B** which both have the same structure as described above. On opposite sides of each rotor, two stators are positioned. For example, stators **61A** and **61B** are disposed on the opposite sides of the rotor assembly **20A.** Similarly, the stators **61C** and **61D** are disposed on the opposite sides of the rotor assembly **20B.** The structure of the stators **61A**, **61B, 61C** and **61D** (collectively "**61**") is similar to that of the stators **21** discussed above with reference to **FIG. 7**, with the exception that they each use a magnet array similar to the magnet array **500** shown in **FIG. 5** and are not axially movable relative to the rotors. When the electromagnets of the magnet array are not enabled, the magnetic field produced by the magnet array of a stator **61** is not directed towards the corresponding rotor **20.** In this mode, the magnetic brake is in a disengaged state. Upon powering up the electromagnets (**444** in **FIG. 5**), the Halbach pattern is complete and the magnetic flux produced by the magnet array of a stator **61** is directed towards a corresponding rotor assembly **20** which induces eddy currents therein. The eddy currents produce a braking effect on the rotor assembly **20** when the rotor is rotating with a sufficiently high speed.

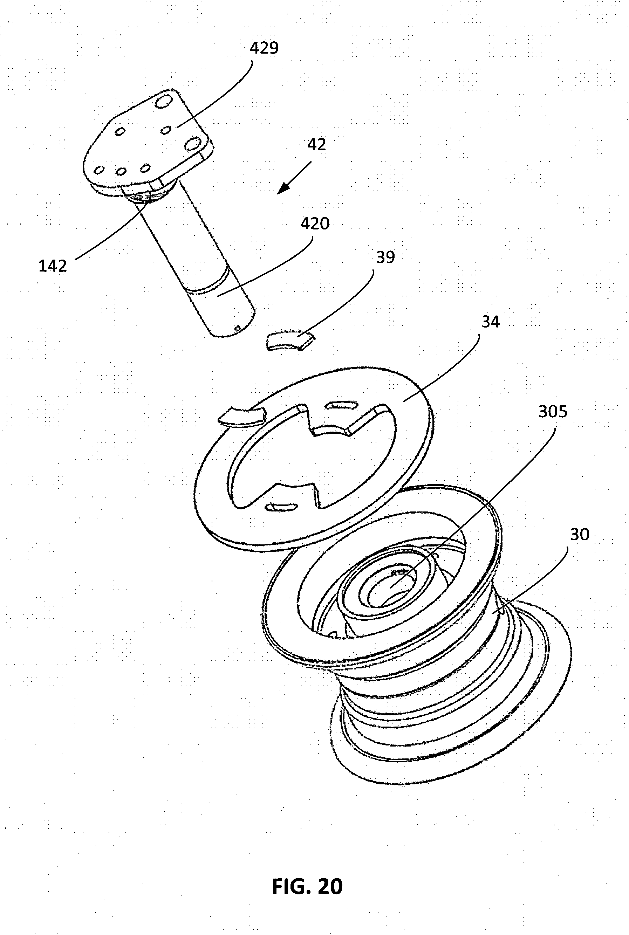

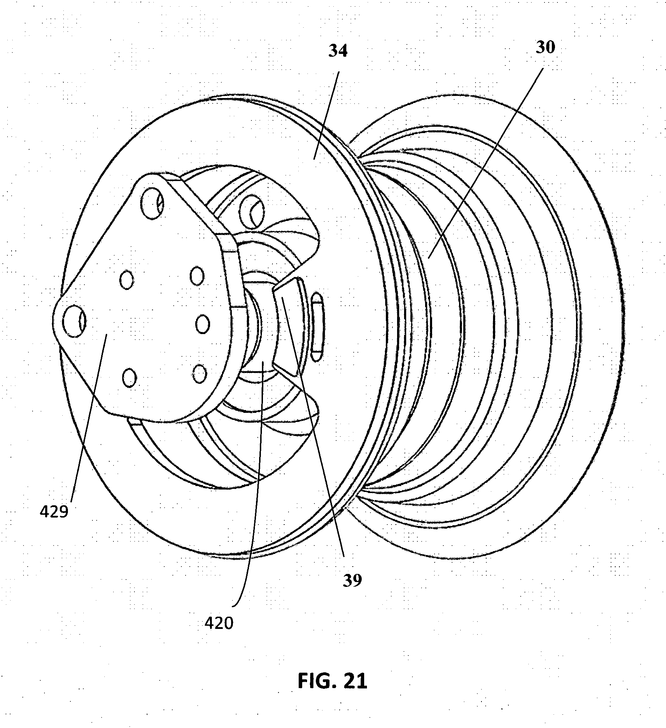

**FIGS. 20-21** show a wheel rim and an associated rotor assembly. The wheel rim **30** has a central cylindrical bore **305.** A rotor **34** is attached to the inside of the wheel rim **30.** The rotor **34** is permanently attached to the rim **30** and therefore rotates at the same angular velocity as the wheel. A number of brake pads **39** are attached on the rotor face that faces away from the wheel rim **30.** A non-rotating base portion **42** is comprised of a cylindrical portion **420** having an external helical spline **142** formed on a portion thereof. The spline **142** is suitable for meshing with a groove of a sleeve which fits on the non-rotating base portion. Additionally, the spline **142** resists torque applied to the sleeve **41** during braking. At one end of the cylindrical portion, the non-rotating base portion has an end plate **429.** When assembled together, the cylindrical portion **420** of the base portion **42** is inserted into the bore **305** of the rim **30.** The wheel rim **30** is not part of the brake assembly, but is shown for clarity.

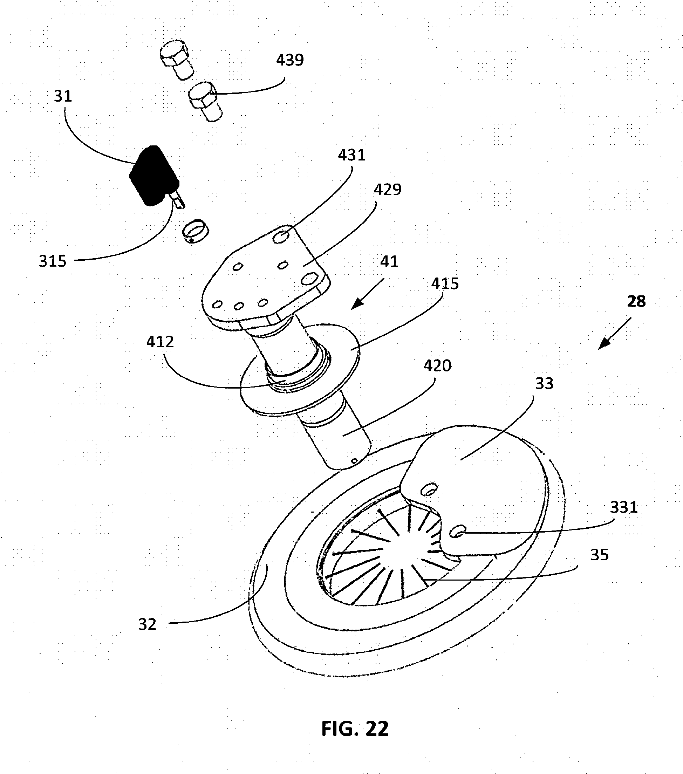

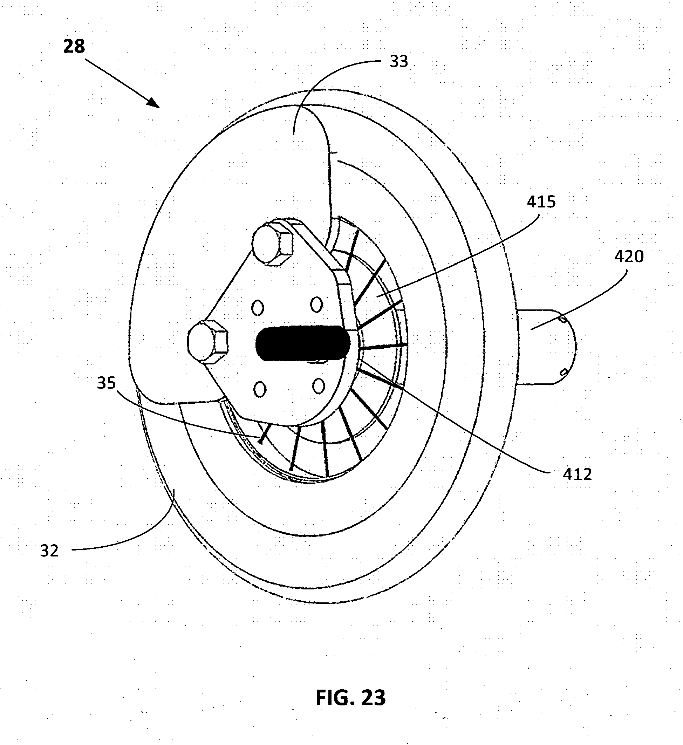

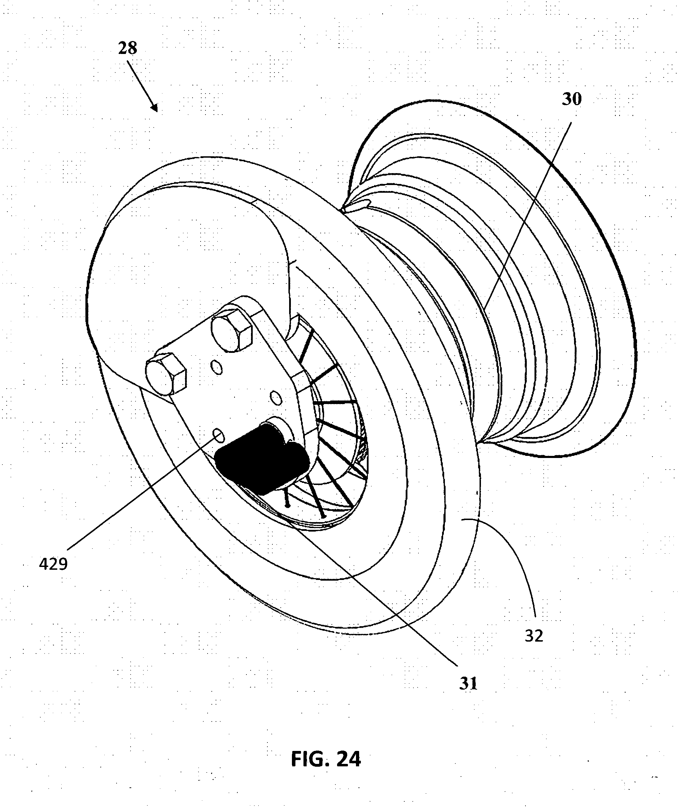

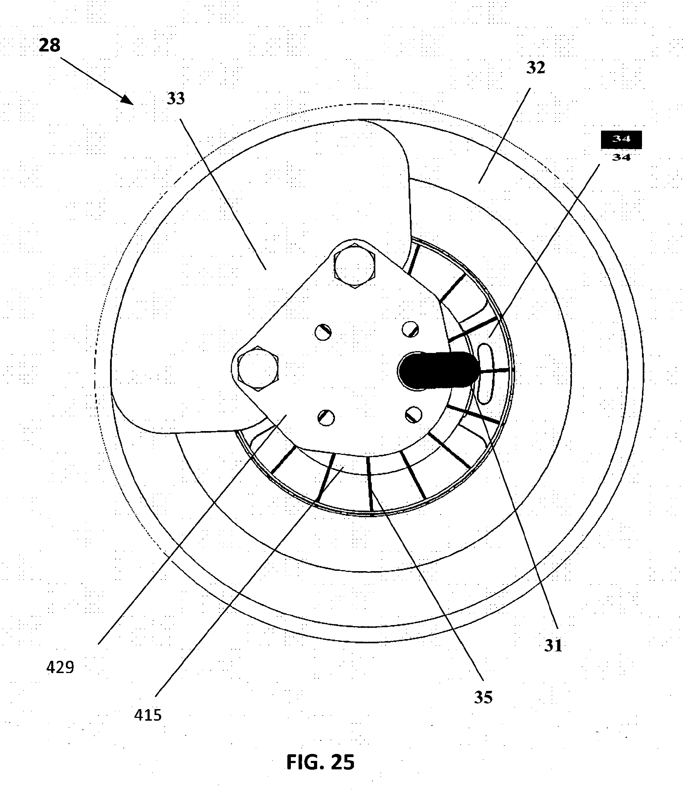

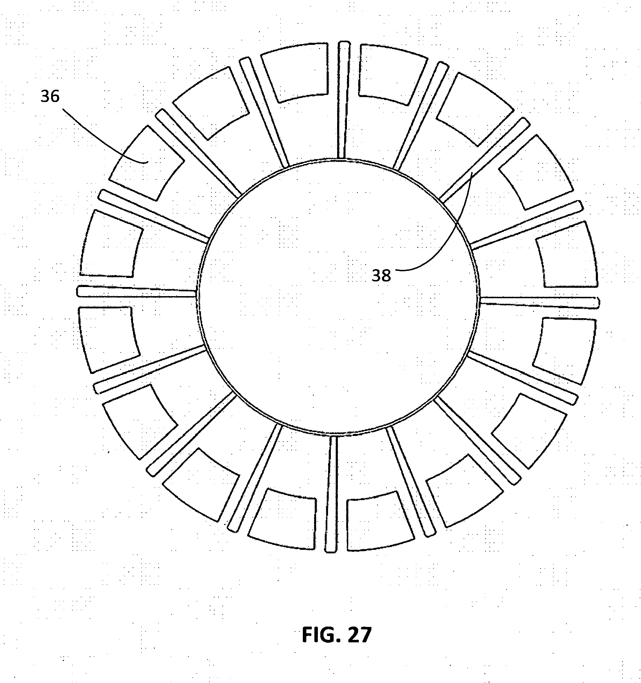

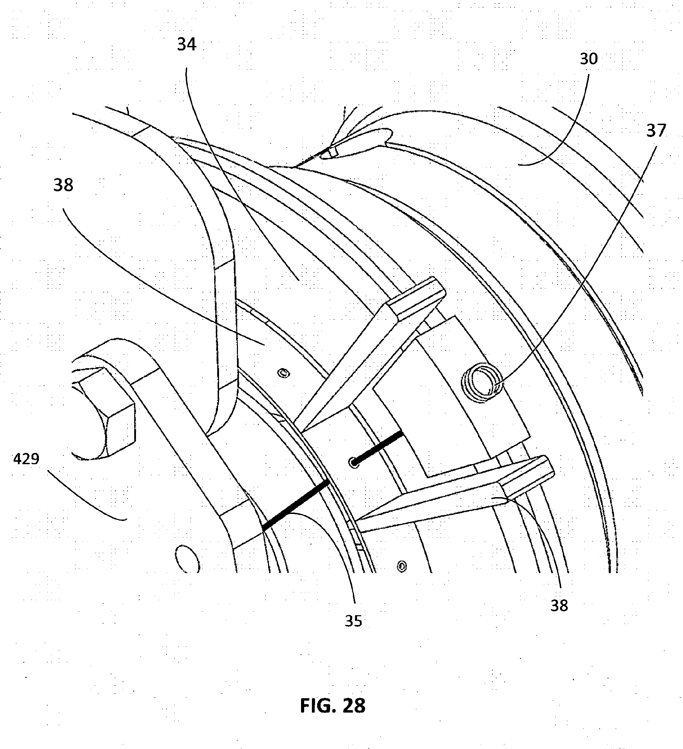

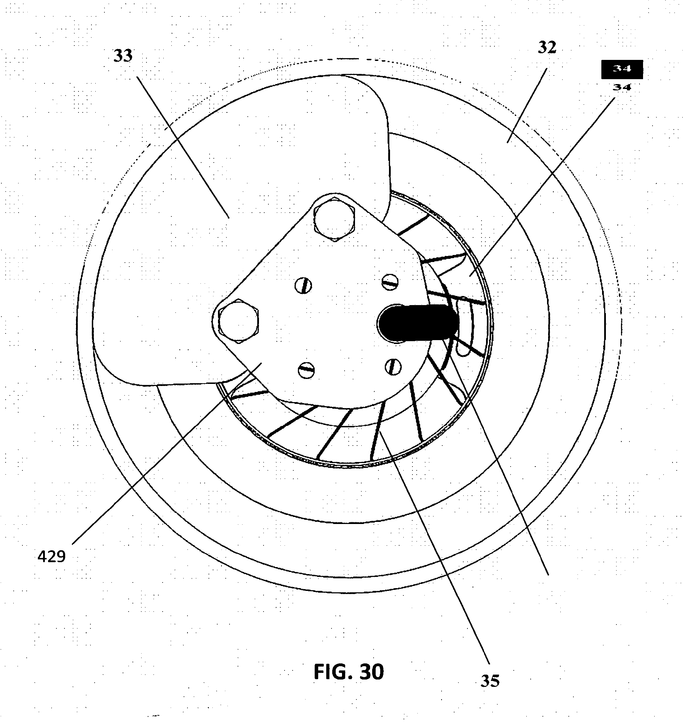

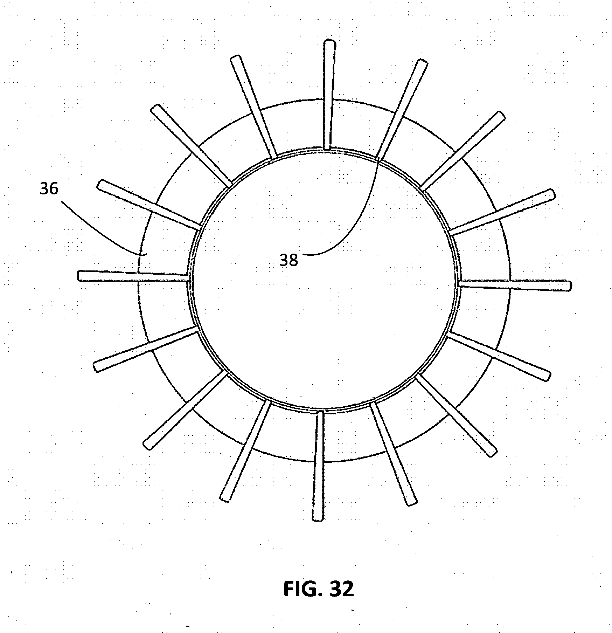

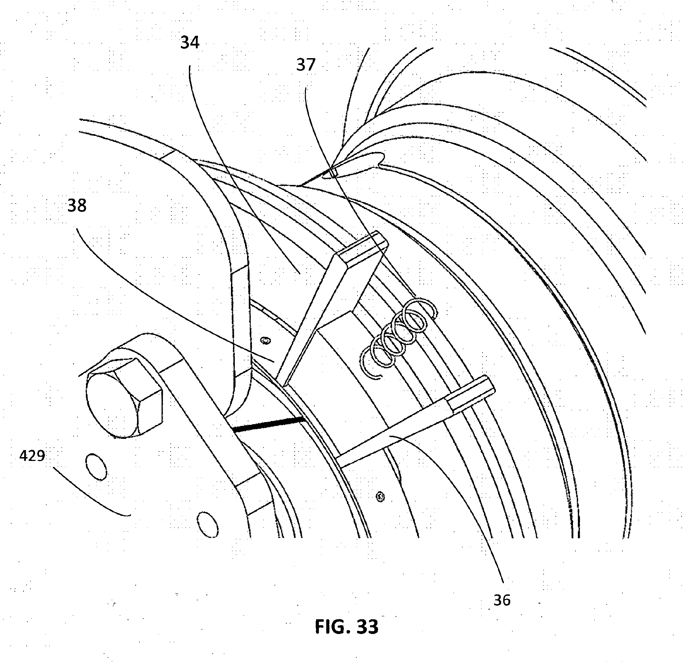

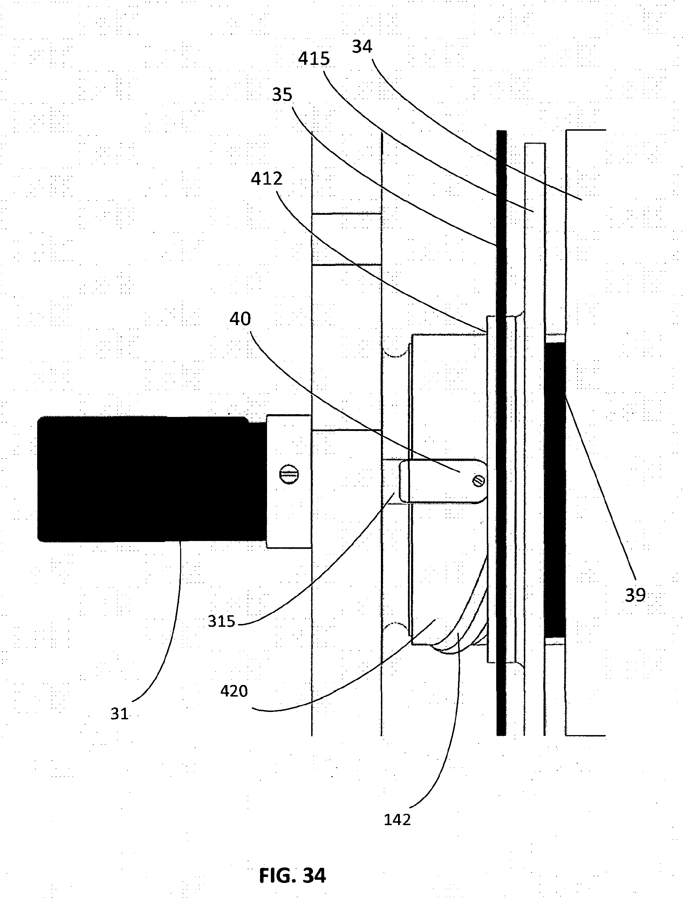

**FIGS. 22-34** depict a radially actuated magnetic brake assembly 28 in accordance with embodiments of the present invention. A sleeve **41** is comprised of a tubular portion **412** and a disc portion **415.** The sleeve **41** includes an internal helical groove formed on the inner walls of a central bore thereof. The helical groove of the sleeve **41** is sized and shaped to mesh with the external helical spline **142** of the non-rotating base portion **42.** The sleeve **41** is mounted on the non-rotating portion **42** such that the spline **142** is meshed with the internal groove of the sleeve **41.** The brake assembly includes as housing **32** and a connector plate **33** connected thereto. The housing **32** is annular in shape and is sized to fit on the wheel rim **30** thus covering the rotor **34.** The brake housing **32** has a radius greater than that of the rotor **34.** The connector plate has fastener holes **331** formed thereon. The end plate **429** of the non-rotating base portion **42** also features fastener holes **431.** A plurality of fasteners **439** pass through the holes **431** and engage the holes **331** to connect the non-rotating portion to the plate **33,** thus connecting the non-rotating portion **42** to the brake housing **32.** A linear electric actuator **31** is connected to the end plate **429** and has a connecting member **315** passing through one of the holes **431.** As best seen in **FIG. 34****,** the connecting member **315** is connected to an actuator rod **40** which in turn abuts, but is not connected to, the tubular member **412** of sleeve **41.** This positioning of the actuator rod **40** and the sleeve **41** allows for relative rotation between the actuator **31** and sleeve **41** as will be described below. Accordingly, the actuator **31** is configured to axially move the sleeve **41** along the non-rotating base portion **42.**

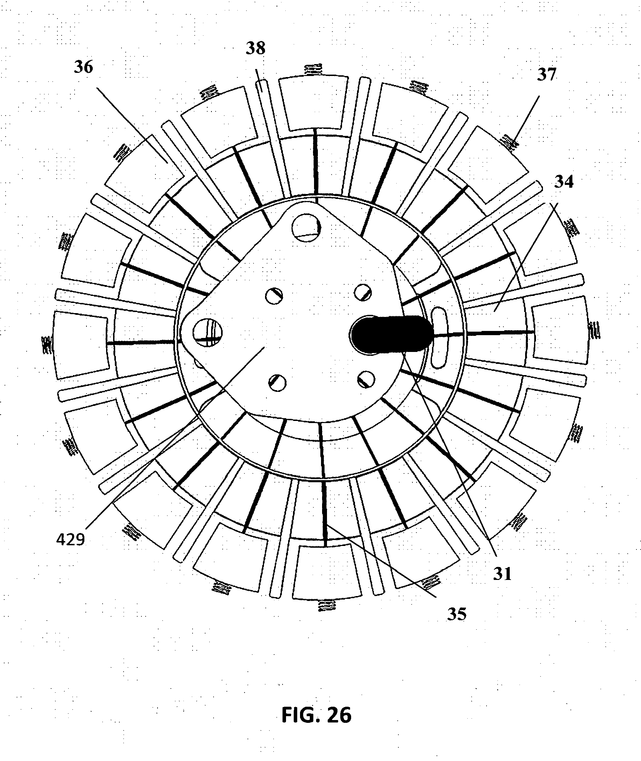

A plurality of magnets **36** are radially positioned in the housing **32.** The magnets are arranged in a circular Halbach array as described earlier. A plurality of radially oriented cables **35** each connects a corresponding one of the plurality of magnets **36** with the tubular member **412** of sleeve **41.** A plurality of tension springs **37** are each connected to a corresponding magnet **36** to bias the magnet into an outer position best seen in **FIG. 26****.** In one embodiment, the one end of a spring **37** is fixedly connected to the inside of the housing **32** and the other end is connected to a corresponding magnet **36.**

In a disengaged position of the magnetic brake assembly, the plurality of magnets **36** are positioned in the outer position being flexibly biased into that position by the plurality of corresponding tension springs **37.** In this embodiment of the present invention, the magnets **36** are positioned such that there is adequate clearance between them and the rotor **34,** so that the magnets **36** may move freely in front of the rotor **34** with no interference or contact. The magnets **36** are contained in the non-ferromagnetic housing **32.** Within the housing **32** are a plurality of guiding tracks **38,** which serve to properly align the magnets **36** during brake actuation. In this embodiment of the present disclosure, the housing **32** is rigidly connected with the axle end plate 4**29**, which is in turn bolted to the landing gear structure.

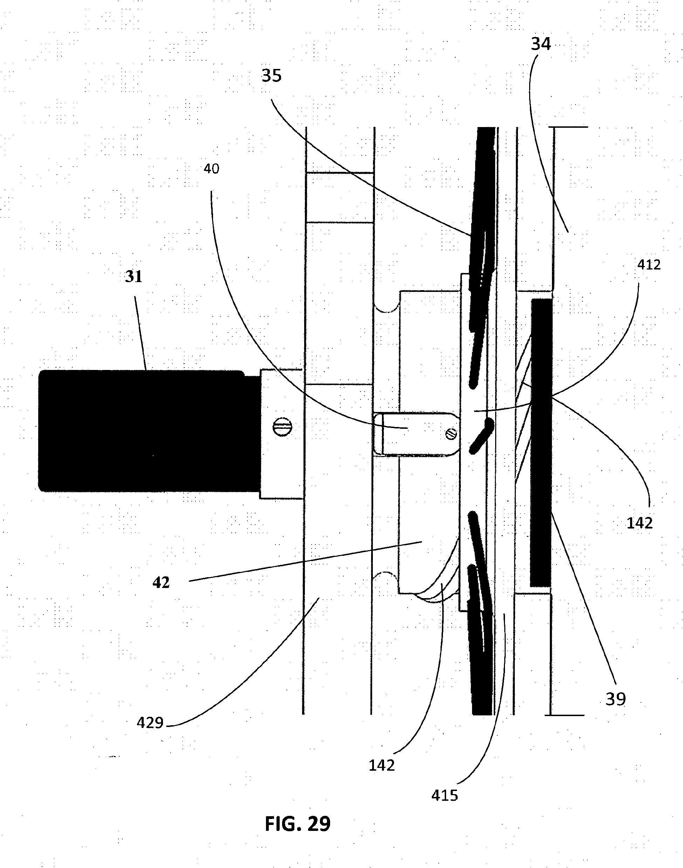

As best seen in **FIG. 26****,** the magnets **36** form a circumferential Halbach magnet array that is larger in radius than the rotor **34.** Accordingly, although the magnetic flux produced by the magnet array is directed towards the rotor **34,** the magnetic flux has a larger circumference and does not substantially overlap with the rotor **34.** Accordingly, little to no eddy currents are induced in the rotor **34.** Accordingly, little to no magnetic braking takes place with respect to the rotor **34.** Furthermore, as best seen in **FIG. 29****,** the sleeve **41** is positioned with respect to the non-rotating portion such that the disc portion **415** thereof does not engage the brake pads **39** of the rotor **34.** Accordingly, no friction braking takes place in the disengaged mode.

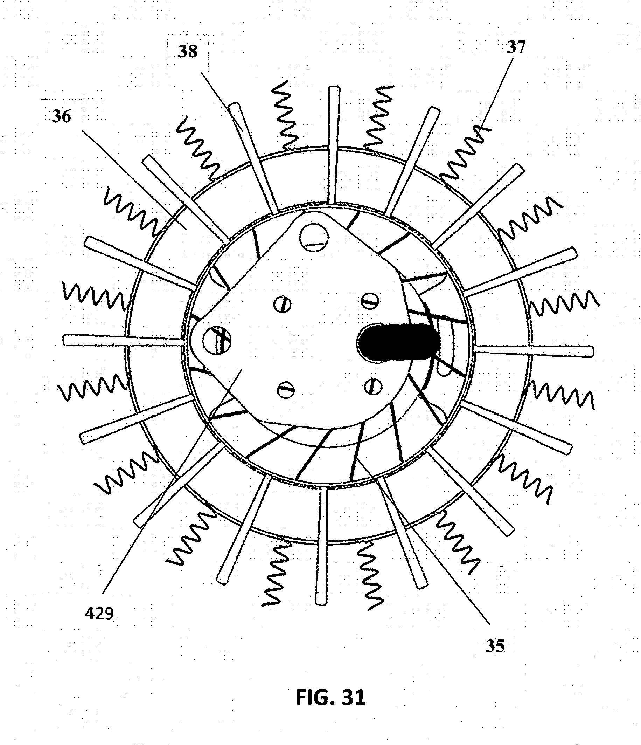

To engage the brake, the electric linear actuator **31** is activated. The actuator **31** moves its connecting member **315** and the actuator rod **40** axially towards the sleeve **41.** The actuator rod **40** transfers the axial movement of the connecting member **315** to the sleeve **41.** Accordingly, the sleeve **41** is moved axially towards the rotor **34**. Due to the meshing between the helical groove of the sleeve **41** and the helical spline **142** of the non-rotating base portion **42,** the sleeve **41** rotates as it is being moved axially by action of the linear actuator. The rotation of the sleeve **41** and more particularly the tubular portion **412** of the sleeve **41,** causes the cables **35** to wrap around the tubular portion **412.** As the cables **35** wrap around the tubular portion **412** their effective length is shortened. As a result, the magnets **36** are pulled by the cables **35** and moved radially inwards to an inner radial position thereof, guided by the tracks **38.** As the radial position of the magnets **36** is decreased they start overlapping radially with the rotor **34,** inducing some eddy currents therein and accordingly some braking torque is produced. Eventually, the magnets **36** are guided by the tracks **38** to their inner radial position. At that point, the brake is in the fully engaged position. As best seen in **FIG. 31****,** in their inner radial positon the magnets **36** are aligned and fully overlap with the face of the rotor **34.** Accordingly, the magnetic flux produced by the magnets **36** induces significant eddy currents in the rotor **34** when the rotor is rotating with a sufficient rotational speed. The induced eddy currents in the rotor **34** produces a braking effect as explained above. As best seen in **FIG. 34****,** in the engaged mode, the disc portion **415** of the sleeve **41** frictionally engages the brake pad **39** thus producing a friction braking effect in addition to the magnetic braking.

To disengage the brake, the magnetic linear actuator **31** retracts the connecting member **315** towards the end plate **429.** When the actuator **31** retracts its connecting member **315,** the actuator rod **40** is moved axially away from the sleeve **41.** Accordingly, the sleeve **41** is no longer biased axially towards the rotor by the actuator rod **40.** The tension springs **37** pull the magnets radially outwardly towards the outer radial position, the cables **35** are tensioned under the action of the tension springs **37.** The tension in the cables **35** causes the cables **35** to apply a tangential force on the tubular portion **412** causing the sleeve **41** to rotate in an opposite direction than the one it did when it was moved axially towards the rotor **34.** Because of the meshing between the helical groove of the sleeve **41** and the helical spline **142** of the non-rotating portion **42,** as the sleeve **41** rotates it slides along the non-rotating base portion in a direction away from the rotor **34.** As best seen in **FIG. 26****,** the magnets **36** are biased to their outer radial position by action of the tension springs **37.**

In one embodiment, the connector plate **33** is welded to the brake housing **32** and bolted to the axle end plate 4**29**. In other embodiments of the present disclosure, the connector plate **33** may be an integral part of the brake housing **32,** and may be machined from the same stock or forged as one part. In yet other embodiments of the present disclosure, the non-rotating base portion end plate 4**29** may be made larger and bolted directly to a flat portion of the brake housing **32,** with no intermediate connector plate.

In the depicted embodiment the rotor **34** is directly attached to the wheel rim **30** with no clearance therebetween. In other embodiments of the present invention, the rotor **34** may be attached to the wheel rim **30** at a discrete number of points around the circumference of the wheel. In the aforementioned embodiments, the rotor **34** may be elevated from the surface of the wheel rim **30,** such that contact between the components is reduced and therefore the amount of heat conducted from the rotor **34** to the wheel and tire during braking is decreased. In some embodiments of the present invention, a layer of insulative material may be placed between the rotor **34** and the wheel rim **30** to further reduce heat conduction. The rotor **34** may be made partly or entirely from copper, aluminum, beryllium, or alloys or composites thereof, or any other high electric conductivity, high heat capacity material. The rotors **34** preferably are thick enough to collectively absorb the entirety of the aircraft's kinetic energy without increasing their temperature to a high enough point that the electric conductivity or mechanical strength of their constitutive material is excessively reduced. For most aircraft types to which this type of braking system is well suited, there is one brake unit per wheel.

In some embodiments (not shown), an iron backplate may be placed behind the rotor **34** on the opposite side to that facing the magnets **36.** The backplate may help guide the magnetic field lines from the magnets **36** into the rotor **34,** thus improving braking performance. In some embodiments of the present invention, the backplate may be a solid disc while in other embodiments, it may be perforated at regular intervals around the circumference for material and weight savings. In an example embodiment of the present disclosure, the backplate may be attached to the wheel rim **30** and the rotor **34** may in turn be attached to the backplate, forming a rotor-backplate assembly.

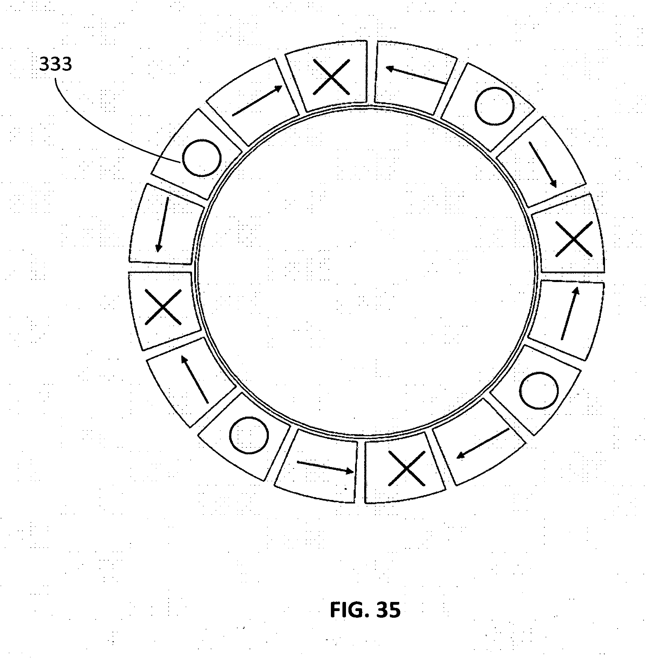

In one embodiment of the present invention, there are sixteen arc magnets **36** arranged around the perimeter of and in front of the rotor **34.** In some embodiments of the present disclosure, the magnets **36** comprise high-strength neodymium iron boron (NdFeB) permanent arc magnets. The magnets **36** may be arranged in special patterns such as a circumferential Halbach array with magnet orientations as shown in **FIG. 35****.** The Halbach pattern of the magnet array is such that it concentrates the magnetic flux produced by the magnets **36** towards the rotor **34.** In some embodiments of the present disclosure, the magnets **36** or the housing **32** may be coated with a layer of insulative material to protect the magnets **36** from scratching, heat, and impact loads. In some embodiments of the present invention, the magnets **36** may be tightly fit into the guiding track **38** such that there is minimal vibration or movement of each magnet **36** under the influence of the other magnets' magnetic fields.

In other embodiments of the present invention, the NdFeB permanent magnets may be cubes, rectangular prisms, cylinders, discs, or they may be arcs with curved side walls. In some embodiments of the present invention, the magnets may be of a different thickness relative to each other, or the magnet array may comprise magnets of varying or non-uniform thicknesses.

The braking torque produced by the brake is controlled by varying the radial position of the magnets **36** with respect to the center of the rotor **34.** Decreasing the radial position of the magnets **36** relative to the rotor **34** results in greater braking torque, while increasing the radial position of the magnets **36** relative to the rotor **34** results in lower braking torque. To fully disengage the brake, the radial position of the magnets **36** is increased until they are located at a radial distance greater than the outer radius of the rotor **34** such that the magnetic flux passing through the rotor **34** is minimal, thus producing little or no eddy currents.

In other embodiments of the present invention, the magnets **36** may be actuated by separate actuators connected to each magnet.

In some embodiments (not shown) of the present invention, there may be two sets of magnets **36** arranged on either side of the rotor **34.** The second set of magnets may be aligned with the first set of magnets **36** such that the polarities of the magnets in the second set are a mirror reflection of those in the first set. Alternatively, the second set of magnets may be offset relative to the first set of magnets **36** such that the polarities of the magnets in the first set are reflected across the plane of the rotor **34** and then rotated clockwise or counterclockwise by a certain angle to define the polarities of the magnets in the second set. Offsetting the polarities of the magnets in the second set relative to the first set of magnets **36** may result in a change in the amount of magnetic flux passing through the rotor **34** for a given configuration. In this embodiment of the present disclosure, the brake housing **32** is modified to accommodate the second set of magnets **36** and is extended to reach the other side of the rotor **34.** The actuation mechanism comprising sleeve **41,** cables **35,** and springs **37** is also modified such that there exists a parallel cables-springs configuration to actuate the second set of magnets **36.** The sleeve **41** is connected to both sets of actuation mechanisms. This embodiment of the present invention may provide increased braking torque by increasing the number of magnets **36** used to activate eddy current braking.

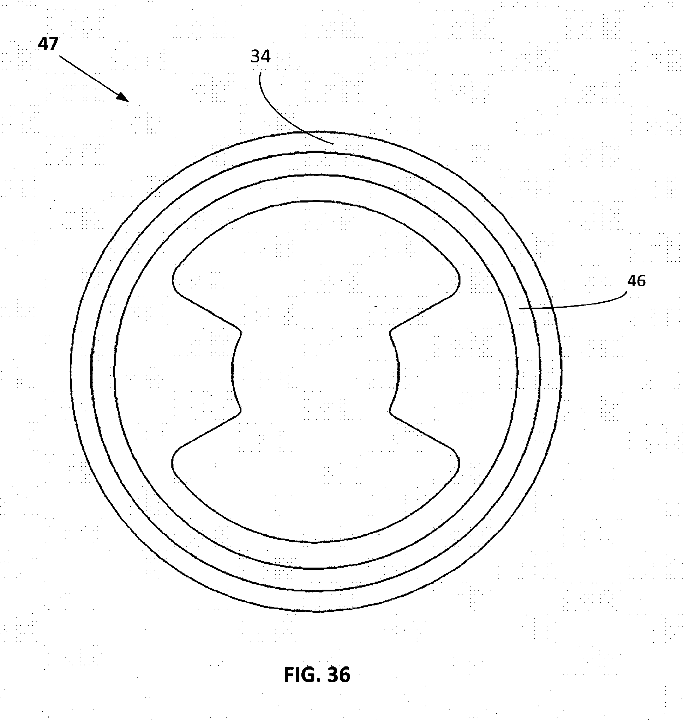

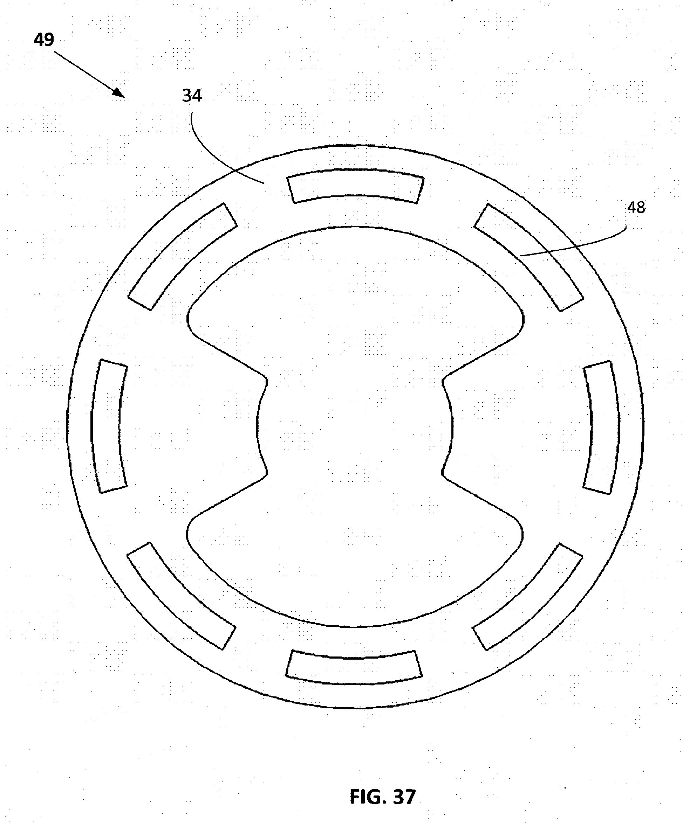

In other embodiments of the present invention, the backplate may be an integral part of the rotor **34,** implemented as an iron core with a copper disc **46** around the core to form a rotor assembly **47,** as shown in **FIG. 36****.** The ferromagnetic core **46** may increase the magnetic flux through the surface of the rotor **34** by altering the magnetic circuit from the magnets **36** across the air gap and through the rotor assembly **47.** The ferromagnetic core **46** may comprise a disc or ring, or it may comprise discrete parts of a regular or irregular geometry interspersed around the circumference of the rotor **34,** for example bars or spheres. The ferromagnetic core **46** may be made from iron, or it may be made from another ferromagnetic material or alloy. The size and shape of the ferromagnetic core may be altered in order to control the amount and distribution of magnetic flux through the rotor **34.** In some embodiments of the present disclosure, the iron core may be made up of multiple separate parts **48** also placed around the core to form a rotor assembly **49,** as shown in **FIG. 37****.** Referring now to **FIG. 37****,** in other embodiments of the present disclosure, the ferromagnetic core may be broken up into multiple separate cores **48,** thus creating another rotor assembly **49.**

In some embodiments of the present invention, the arrays of magnets **36** may be partially or fully replaced or supplemented by electromagnets. The electromagnets may be placed adjacent to, in front of, behind, opposite, or in place of the magnets **36.** In this embodiment of the present invention, the electromagnets are controlled by the flow of electrical current to each unit. Varying the direction and strength of the current supplied to each electromagnet can adjust the strength of the overall magnetic field produced by both the magnets **36** and the electromagnets. Flow of electrical current in one direction through the electromagnet coils may increase the sum strength of the magnetic field while flow of current in the opposite direction through the coils may decrease the sum strength of the magnetic field. This may allow for the precise adjustment of the magnetic field strength and the magnetic flux through the rotor **34,** and therefore the braking torque produced by the magnetic brake. It may also provide an alternate means to partially disengage the magnetic brake by cutting the flow of electrical current to one or more electromagnets.

In other embodiments of the present invention, a complementary friction brake may supplement braking performance at low angular velocities. In some embodiments of the present invention, friction braking may be achieved using the same actuator **31** used to control eddy current braking. The flat prongs of the rotor **34** carry a brake pad **39** comprising carbon ceramic material on the side facing the sleeve **41.**

In one embodiment of the present invention, the actuator **31** pushes the sleeve **41** against the brake pad **39** on the rotor **34,** which come into contact at the fully on position. This results in a contact pressure between the sleeve face **41** and the rotor brake pad **39,** thereby creating a frictional force to slow the rotation of the wheel or to hold the wheel in place. **FIGS. 29** and **34** illustrate the gap between the sleeve **41** and the brake pad **39** in the fully or partially disengaged (off) position and the uniform frictional contact between the sleeve **41** and the brake pad **39** in the fully engaged (on) position.

## Claims

1. A magnetic brake assembly for use with a wheel rim, the wheel rim rotatable about a rotational axis, the magnetic brake assembly comprising:
at least one rotor (17) secured to rotate with the wheel rim;
at least one stator (21) secured to be rotationally stationary relative to the rotor;
one of the rotor (17) and stator (21) comprising an electrically conductive body and the other of the rotor and stator comprising a magnetic array (500) comprising a plurality of magnets (333, 444) configured to generate a magnetic flux; and
an actuator operably connected to at least one of the electrically conductive body and the magnetic array (500) to selectively effect a brake mode and a non-brake mode, wherein in the brake mode the magnetic array induces eddy currents in the electrically conductive body to cause a magnetic braking force therein when the rotor rotates above a threshold speed and in the non-brake mode the induced eddy currents cause a negligible or no magnetic braking force as the rotor rotates above the threshold speed,
**characterized in that**:
the plurality of magnets (333, 444) comprises a plurality of permanent magnets (333) and a plurality of electromagnets (444); and
the actuator comprises an electrical relay that turns on the plurality of electromagnets (444) in the brake mode and turns off the plurality of electromagnets (444) in the non-brake mode.

2. The magnetic brake assembly of claim 1, **characterized in that** the magnetic brake assembly comprises a friction brake that is actuatable to apply a friction braking force on the rotor.

3. The magnetic brake assembly of claim 2, **characterized in that** the friction brake is actuated by the actuator to apply the friction braking force after the magnetic braking force is applied on the rotor.

4. The magnetic brake assembly of any one of claims I to 3, **characterized in that**:
the plurality of electromagnets and the plurality of permanent magnets are arranged circumferentially in a circular Halbach array such that the magnetic flux of the magnetic array is substantially one-sided and in a direction substantially perpendicular to the magnetic array when at least some of the plurality of electromagnets are turned on; and
the placement and configuration of the plurality of electromagnets within the magnetic array is such that the polarity of at least some of the plurality of electromagnets when turned on determines which side of the magnetic array experiences a substantially greater magnetic flux.

5. The magnetic brake assembly of claim 1, **characterized in that**:
the actuator comprises a mechanical actuator that is configured to effect the brake mode and the non-brake mode by changing a relative position of the magnetic array and the electrically conductive body; and
wherein positioning the magnetic array and the electrically conductive body closer together increases the amount of induced eddy currents to effect the brake mode and positioning the magnetic array and the electrically conductive body farther apart decreases the amount of induced eddy currents to effect the non-brake mode.

6. The magnetic brake assembly of claim 5, **characterized in that**:
the mechanical actuator comprises at least one linear displacer operably connected with the stator for axially moving the stator along the non-rotating base; and
the mechanical actuator is configured to move the stator axially towards the rotor along the rotational axis of the wheel rim to effect the brake mode and axially away from the rotor to effect the non-brake mode.

7. The magnetic brake assembly of claim 6 further comprising a non-rotating base, **characterized in that**:
the rotor comprises the electrically conductive body;
the stator comprises the magnetic array,
the stator is slidably mounted on the non-rotating base;
the mechanical actuator being configured to move the stator relative to the rotor along the non-rotating base to vary the magnetic braking force effected on the rotor; and
the non-rotating base and the stator having mateable splines such that the stator is capable of resisting a torque applied about the rotational axis.

8. The magnetic brake assembly of claim 6, further **characterized in that** the magnetic brake assembly includes a first friction element connected with the rotor and a second friction element connected with the stator and configured to mutually engage to effect a friction braking force on the rotor when the actuator moves the stator within a predetermined distance of the rotor.

9. The magnetic brake assembly of claim 5, **characterized in that**:
the rotor comprises the electrically conductive body;
the stator comprises the magnetic array;
the magnetic array comprises a plurality of magnets that arc movable in a radial direction with respect to the rotational axis of the wheel rim, and;
the mechanical actuator being configured to move each of the plurality of magnets radially from an outer radial position to an inner radial position to effect the brake mode, wherein a distance between each of the plurality of magnets and the rotor is greater at the outer radial position than at the inner radial position.

10. The magnetic brake assembly of claim 9, **characterized in that** each of the plurality of magnets is flexibly biased in the outer radial position and are moved to the inner radial position by action of the mechanical actuator.

11. The magnetic brake assembly of claim 10, **characterized in that** the magnetic brake assembly further comprises:
a non-rotating base having an elongate portion;
the elongate portion being cylindrical and having a helical spline on a surface thereof;
a sleeve slidable along the elongate portion and having an internal helical groove sized and shaped to mate with the helical spline on the elongate portion for causing the sleeve to rotate around an axis of the elongate portion when sliding axially therelong; and
wherein:
the mechanical actuator is configured to move the sleeve axially along the elongate portion between a deactivated state and an activated state; and
the plurality of magnets are connected with the sleeve and are movable between the outer radial position and the inner radial position with the rotation of the sleeve around the axis of the elongate portion by means of a plurality of members connecting the plurality of magnets to the sleeve.

12. The magnetic brake assembly of claim 11, **characterized in that**:
the rotor has at least one brake pad attached thereto;
the sleeve has a circular disc at an end thereof, and
wherein in the activated state the circular disc frictionally engages the brake pad for producing a frictional braking effect therewith.

13. The magnetic brake assembly of claim I, **characterized in that** the electrically conductive body is embedded with one or more ferromagnetic cores configured to increase the magnetic flux through the electrically conductive body when the brake mode is effected.

14. The magnetic brake assembly of any one of claims 1 to 13, **characterized in that** the plurality of electromagnets and the plurality of permanent magnets are arranged in groups of multiple adjacent permanent magnets interspaced by respective electromagnets at regular intervals.

## Patentansprüche

1. Eine Magnetbremsbaugruppe zur Verwendung mit einer Radfelge, wobei die Radfelge um eine Drehachse drehbar ist, wobei die Magnetbremsbaugruppe Folgendes umfasst:
mindestens einen Rotor (17), der so befestigt ist, dass er sich mit der Radfelge dreht;
mindestens einen Stator (21), der relativ zum Rotor drehfest befestigt ist;
Einer von Rotor (17) und Stator (21) umfasst einen elektrisch leitenden Körper und der andere von Rotor und Stator umfasst eine magnetische Anordnung (500), die eine Vielzahl von Magneten (333, 444) umfasst, die so konfiguriert sind, dass sie einen magnetischen Fluss erzeugen; Und
einen Aktuator, der betriebsmäßig mit dem elektrisch leitenden Körper und/oder der magnetischen Anordnung (500) verbunden ist, um selektiv einen Bremsmodus und einen Nicht-Bremsmodus zu bewirken, wobei die magnetische Anordnung im Bremsmodus Wirbelströme in dem elektrisch leitenden Körper induziert, um eine magnetische Bewegung zu bewirken Es entsteht eine Bremskraft, wenn sich der Rotor über einer Schwellengeschwindigkeit dreht, und im Nichtbremsmodus verursachen die induzierten Wirbelströme eine vernachlässigbare oder keine magnetische Bremskraft, wenn sich der Rotor über der Schwellengeschwindigkeit dreht,
**dadurch gekennzeichnet, dass**:
die mehreren Magnete (333, 444) umfassen mehrere Permanentmagnete (333) und mehrere Elektromagnete (444); Und
der Aktuator umfasst ein elektrisches Relais, das die mehreren Elektromagnete (444) im Bremsmodus einschaltet und die mehreren Elektromagnete (444) im Nichtbremsmodus ausschaltet.

2. Magnetbremsenanordnung nach Anspruch 1, **dadurch gekennzeichnet, dass** die Magnetbremsanordnung eine Reibungsbremse, die betätigt werden kann, um eine Reibungsbremskraft auf den Rotor auszuüben.

3. Magnetbremsenanordnung nach Anspruch 2, **dadurch gekennzeichnet, dass** die Reibungsbremse durch den Aktuator betätigt wird, um die Reibungsbremskraft auszuüben, nachdem die magnetische Bremskraft auf den Rotor ausgeübt wird.

4. Magnetbremsanordnung nach einem der Ansprüche 1 bis 3, **dadurch gekennzeichnet, dass**:
Die mehreren Elektromagnete und die mehreren Permanentmagnete sind umlaufend in einer kreisförmigen Halbach-Anordnung angeordnet, sodass der Magnetfluss der magnetischen Anordnung im Wesentlichen einseitig und in einer Richtung im Wesentlichen senkrecht zur magnetischen Anordnung verläuft, wenn zumindest einige der mehreren Elektromagnete sind eingeschaltet; Und
Die Platzierung und Konfiguration der mehreren Elektromagnete innerhalb der magnetischen Anordnung ist so, dass die Polarität zumindest einiger der mehreren Elektromagnete beim Einschalten bestimmt, welche Seite der magnetischen Anordnung einen wesentlich größeren Magnetfluss erfährt.

5. Magnetbremsanordnung nach Anspruch 1, **dadurch gekennzeichnet, dass**:
der Aktuator umfasst einen mechanischen Aktuator, der so konfiguriert ist, dass er den Bremsmodus und den Nichtbremsmodus durch Ändern einer relativen Position der magnetischen Anordnung und des elektrisch leitenden Körpers bewirkt; Und
wobei die Positionierung der magnetischen Anordnung und des elektrisch leitenden Körpers näher beieinander die Menge der induzierten Wirbelströme erhöht, um den Bremsmodus zu bewirken, und eine Positionierung der magnetischen Anordnung und des elektrisch leitenden Körpers weiter voneinander entfernt die Menge der induzierten Wirbelströme verringert, um den Nicht-Bremsmodus zu bewirken.

6. Magnetbremsanordnung nach Anspruch 5, **dadurch gekennzeichnet, dass**:
der mechanische Aktuator umfasst mindestens einen linearen Verdränger, der betriebsmäßig mit dem Stator verbunden ist, um den Stator axial entlang der nicht rotierenden Basis zu bewegen; Und
Der mechanische Aktuator ist so konfiguriert, dass er den Stator entlang der Drehachse der Radfelge axial zum Rotor hin bewegt, um den Bremsmodus zu bewirken, und axial vom Rotor weg, um den Nichtbremsmodus zu bewirken.

7. Magnetbremsbaugruppe nach Anspruch 6, die weiterhin eine nicht rotierende Basis umfasst, **dadurch gekennzeichnet, dass**:
der Rotor umfasst den elektrisch leitenden Körper;
der Stator umfasst die magnetische Anordnung;
der Stator ist verschiebbar auf der nicht rotierenden Basis montiert;
wobei der mechanische Aktuator so konfiguriert ist, dass er den Stator relativ zum Rotor entlang der nicht rotierenden Basis bewegt, um die auf den Rotor ausgeübte magnetische Bremskraft zu variieren; Und
Die nicht rotierende Basis und der Stator haben zusammenpassende Keilverzahnungen, so dass der Stator einem um die Drehachse ausgeübten Drehmoment widerstehen kann.

8. Magnetbremsenanordnung nach Anspruch 6, weiterhin **dadurch gekennzeichnet, dass** die magnetische Bremsanordnung ein erstes Reibungselement umfasst, das mit dem Rotor verbunden ist, und ein zweites Reibungselement, das mit dem Stator verbunden und so konfiguriert ist, dass sie gegenseitig in Eingriff kommen, um eine Reibungsbremskraft auf den Rotor auszuüben, wenn der Aktuator den Stator innerhalb eines vorgegebenen Bereichs bewegt Abstand des Rotors.

9. Magnetbremsanordnung nach Anspruch 5, **dadurch gekennzeichnet, dass**:
der Rotor umfasst den elektrisch leitenden Körper;
der Stator umfasst die magnetische Anordnung;
die Magnetanordnung umfasst eine Vielzahl von Magneten, die in einer radialen Richtung in Bezug auf die Drehachse der Radfelge beweglich sind, Und;
wobei der mechanische Aktuator so konfiguriert ist, dass er jeden der mehreren Magnete radial von einer äußeren radialen Position zu einer inneren radialen Position bewegt, um den Bremsmodus zu bewirken, wobei ein Abstand zwischen jedem der mehreren Magnete und dem Rotor an der äußeren radialen Position größer ist als an der inneren radialen Position.

10. Magnetbremsanordnung nach Anspruch 9, **dadurch gekennzeichnet, dass** jeder der mehreren Magnete flexibel in die äußere radiale Position vorgespannt ist und durch die Wirkung des mechanischen Aktuators in die innere radiale Position bewegt wird.

11. Magnetbremsanordnung nach Anspruch 10, **dadurch gekennzeichnet, dass** die magnetische Bremsanordnung weiterhin Folgendes umfasst:
eine nicht rotierende Basis mit einem länglichen Abschnitt;
der längliche Abschnitt ist zylindrisch und weist auf einer Oberfläche eine spiralförmige Verzahnung auf;
eine Hülse, die entlang des länglichen Abschnitts verschiebbar ist und eine innere spiralförmige Nut aufweist, die so dimensioniert und geformt ist, dass sie mit der spiralförmigen Keilverzahnung auf dem länglichen Abschnitt zusammenpasst, um zu bewirken, dass sich die Hülse um eine Achse des länglichen Abschnitts dreht, wenn sie axial daran entlang gleitet; Und
worin:
der mechanische Aktuator ist so konfiguriert, dass er die Hülse axial entlang des länglichen Abschnitts zwischen einem deaktivierten Zustand und einem aktivierten Zustand bewegt; Und
Die mehreren Magnete sind mit der Hülse verbunden und können bei Drehung der Hülse um die Achse des länglichen Abschnitts mittels mehrerer Elemente, die die mehreren Magnete mit der Hülse verbinden, zwischen der äußeren Radialposition und der inneren Radialposition bewegt werden.

12. Magnetbremsanordnung nach Anspruch 11, **dadurch gekennzeichnet, dass**:
am Rotor ist mindestens ein Bremsbelag befestigt;
die Hülse weist an einem Ende eine kreisförmige Scheibe auf; Und
wobei die kreisförmige Scheibe im aktivierten Zustand reibschlüssig mit dem Bremsbelag in Eingriff steht, um mit diesem eine reibschlüssige Bremswirkung zu erzeugen.

13. Magnetbremsanordnung nach Anspruch 1, **dadurch gekennzeichnet, dass** der elektrisch leitenden Körper ein oder mehrere ferromagnetische Kerne eingebettet sind, die so konfiguriert sind, dass sie den magnetischen Fluss durch den elektrisch leitenden Körper erhöhen, wenn der Bremsmodus bewirkt wird.

14. Magnetbremsanordnung nach einem der Ansprüche 1 bis 13, **dadurch gekennzeichnet, dass** die mehreren Elektromagnete und die mehreren Permanentmagnete in Gruppen aus mehreren benachbarten Permanentmagneten angeordnet sind, die in regelmäßigen Abständen durch jeweilige Elektromagnete beabstandet sind.

## Revendications

1. Ensemble de frein magnétique destiné à être utilisé avec une jante de roue, la jante pouvant tourner autour d'un axe de rotation, l'ensemble de frein magnétique comprenant :
au moins un rotor (17) solidaire en rotation avec la jante ;
au moins un stator (21) fixé pour être stationnaire en rotation par rapport au rotor ;
l'un du rotor (17) et du stator (21) comprenant un corps électriquement conducteur et l'autre du rotor et du stator comprenant un réseau magnétique (500) comprenant une pluralité d'aimants (333, 444) configurés pour générer un flux magnétique ; et
un actionneur connecté de manière fonctionnelle au corps électriquement conducteur et au réseau magnétique (500) pour effectuer sélectivement un mode de freinage et un mode sans freinage, dans lequel, dans le mode de freinage, le réseau magnétique induit des courants de Foucault dans le corps électriquement conducteur pour provoquer un mouvement magnétique force de freinage à l'intérieur lorsque le rotor tourne au-dessus d'une vitesse seuil et, dans le mode sans freinage, les courants de Foucault induits provoquent une force de freinage magnétique négligeable ou nulle lorsque le rotor tourne au-dessus de la vitesse seuil,
**caractérisé en ce que** :
la pluralité d'aimants (333, 444) comprend une pluralité d'aimants permanents (333) et une pluralité d'électro-aimants (444) ; et
l'actionneur comprend un relais électrique qui active la pluralité d'électro-aimants (444) en mode freinage et désactive la pluralité d'électro-aimants (444) en mode sans freinage.

2. Ensemble de frein magnétique selon la revendication 1, **caractérisé en ce que** l'ensemble de frein magnétique comprend un frein à friction qui peut être actionné pour appliquer une force de freinage par friction sur le rotor.

3. Ensemble de frein magnétique selon la revendication 2, **caractérisé en ce que** le frein à friction est actionné par l'actionneur pour appliquer la force de freinage par friction après que la force de freinage magnétique a été appliquée sur le rotor.

4. Ensemble de frein magnétique selon l'une quelconque des revendications 1 à 3, **caractérisé en ce que** :
la pluralité d'électro-aimants et la pluralité d'aimants permanents sont disposés circonférentiellement dans un réseau de Halbach circulaire de telle sorte que le flux magnétique du réseau magnétique est sensiblement unilatéral et dans une direction sensiblement perpendiculaire au réseau magnétique lorsqu'au moins certains de la pluralité de les électro-aimants sont allumés ; et
le placement et la configuration de la pluralité d'électroaimants à l'intérieur du réseau magnétique sont tels que la polarité d'au moins certains de la pluralité d'électroaimants lorsqu'ils sont allumés détermine quel côté du réseau magnétique subit un flux magnétique sensiblement plus grand.

5. Ensemble de frein magnétique selon la revendication 1, **caractérisé en ce que** :
l'actionneur comprend un actionneur mécanique qui est configuré pour effectuer le mode de freinage et le mode sans freinage en modifiant une position relative du réseau magnétique et du corps électriquement conducteur ; et
dans lequel le positionnement du réseau magnétique et du corps électriquement conducteur plus rapprochés augmente la quantité de courants de Foucault induits pour effectuer le mode de freinage et le positionnement du réseau magnétique et du corps électriquement conducteur plus éloignés diminue la quantité de courants de Foucault induits pour effectuer le mode sans freinage.

6. Ensemble de frein magnétique selon la revendication 5, **caractérisé en ce que** :
l'actionneur mécanique comprend au moins un déplaceur linéaire relié fonctionnellement au stator pour déplacer axialement le stator le long de la base non rotative ; et
l'actionneur mécanique est configuré pour déplacer le stator axialement vers le rotor le long de l'axe de rotation de la jante de roue pour effectuer le mode de freinage et pour l'éloigner axialement du rotor pour effectuer le mode sans freinage.

7. Ensemble de frein magnétique selon la revendication 6, comprenant en outre une base non rotative, **caractérisé en ce que** :
le rotor comprend le corps électriquement conducteur ;
le stator comprend le réseau magnétique ;
le stator est monté coulissant sur la base non rotative ;
l'actionneur mécanique étant configuré pour déplacer le stator par rapport au rotor le long de la base non rotative pour faire varier la force de freinage magnétique effectuée sur le rotor ; et
la base non rotative et le stator ayant des cannelures accouplées de telle sorte que le stator soit capable de résister à un couple appliqué autour de l'axe de rotation.

8. Ensemble de frein magnétique selon la revendication 6, **caractérisé en outre en ce que** l'ensemble de frein magnétique comprend un premier élément de friction relié au rotor et un deuxième élément de friction relié au stator et configuré pour s'engager mutuellement pour effectuer une force de freinage par friction sur le rotor lorsque l'actionneur déplace le stator à une distance prédéterminée du rotor.

9. Ensemble de frein magnétique selon la revendication 5, **caractérisé en ce que** :
le rotor comprend le corps électriquement conducteur ;
le stator comprend le réseau magnétique ;
le réseau magnétique comprend une pluralité d'aimants qui sont mobiles dans une direction radiale par rapport à l'axe de rotation de la jante, et ;
l'actionneur mécanique étant configuré pour déplacer radialement chacun de la pluralité d'aimants d'une position radiale externe à une position radiale interne pour effectuer le mode de freinage, une distance entre chacun de la pluralité d'aimants et le rotor étant plus grande au niveau de la position radiale externe qu'à la position radiale intérieure.

10. Ensemble de frein magnétique selon la revendication 9, **caractérisé en ce que** chacun de la pluralité d'aimants est sollicité de manière flexible dans la position radiale externe et est déplacé vers la position radiale interne par l'action de l'actionneur mécanique.

11. Ensemble de frein magnétique selon la revendication 10, **caractérisé en ce que** l'ensemble de frein magnétique comprend en outre :
une base non rotative ayant une partie allongée ;
la partie allongée étant cylindrique et comportant une cannelure hélicoïdale sur une surface de celle-ci ;
un manchon pouvant coulisser le long de la partie allongée et ayant une rainure hélicoïdale interne dimensionnée et formée pour s'accoupler avec la cannelure hélicoïdale sur la partie allongée pour amener le manchon à tourner autour d'un axe de la partie allongée lorsqu'il coulisse axialement le long de celle-ci ; et
où :
l'actionneur mécanique est configuré pour déplacer le manchon axialement le long de la partie allongée entre un état désactivé et un état activé ; et
la pluralité d'aimants sont reliés au manchon et sont mobiles entre la position radiale externe et la position radiale interne avec la rotation du manchon autour de l'axe de la partie allongée au moyen d'une pluralité d'éléments reliant la pluralité d'aimants au manchon.

12. Ensemble de frein magnétique selon la revendication 11, **caractérisé en ce que** :
le rotor comporte au moins une plaquette de frein qui lui est fixée ;
le manchon comporte un disque circulaire à une extrémité de celui-ci ; et
dans lequel, à l'état activé, le disque circulaire entre en prise par friction avec la plaquette de frein pour produire un effet de freinage par friction avec celle-ci.

13. Ensemble de frein magnétique selon la revendication 1, **caractérisé en ce que** le corps électriquement conducteur est intégré avec un ou plusieurs noyaux ferromagnétiques configurés pour augmenter le flux magnétique à travers le corps électriquement conducteur lorsque le mode de freinage est effectué.

14. Ensemble de frein magnétique selon l'une quelconque des revendications 1 à 13, **caractérisé en ce que** la pluralité d'électro-aimants et la pluralité d'aimants permanents sont disposés en groupes de multiples aimants permanents adjacents espacés par des électro-aimants respectifs à intervalles réguliers.
